(19) Europäisches Patentamt
European Patent Office
Office européen des brevets

(11) **EP 4 725 822 A1**

(12) **EUROPEAN PATENT APPLICATION**

(43) Date of publication:
**15.04.2026 Bulletin 2026/16**

(21) Application number: **25215584.1**

(22) Date of filing: **25.03.2021**

(51) International Patent Classification (IPC):
**B63B 1/18** (2006.01)    **B63B 1/40** (2006.01)
**B63B 1/08** (2006.01)    **B63B 1/24** (2020.01)
**B63B 1/20** (2006.01)

(52) Cooperative Patent Classification (CPC):
**B63B 1/18; B63B 1/08; B63B 1/24; B63B 1/40;**
B63B 2001/202; B63B 2001/204; Y02T 70/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2020 EP 20165953**

(62) Document number(s) of the earlier application(s) in
accordance with Art. 76 EPC:
**21713977.3 / 4 126 652**

(71) Applicant: **Rasmussen Maritime Design AS
4661 Kristiansand (NO)**

(72) Inventor: **MOEN, Roar, Johan
4658 TVEIT (NO)**

(74) Representative: **Acapo Onsagers AS
Edvard Griegs vei 1
5059 Bergen (NO)**

Remarks:
This application was filed on 13-11-2025 as a
divisional application to the application mentioned
under INID code 62.

(54) **VESSEL WITH STERN POSITIONED FOIL TO REDUCE WAVE RESISTANCE**

(57)    The invention concerns a vessel for floating in a body of water, comprising a hull having an aft hull section and an aft body arranged at a distance from the aft hull section, thereby forming a passage into which water can flow. The aft body and the aft hull section are designed to minimize the vessel's stern wave during forward movements.

Figure 1

EP 4 725 822 A1

**Description**

**TECHNCIAL FIELD OF THE INVENTION**

The present invention relates to the design of seagoing vessels and can be applied to a majority of hull types, from slow-moving ships, rigs and barges to high-speed ships and boats that are operated to over planing speed, including sailing boats and multi hull vessels.

In particular, the invention relates to the configuration of a vessel where the vessel's aft part comprises a device that reduces the wave and turbulence resistance of the vessel.

**BACKGROUND OF THE INVENTION**

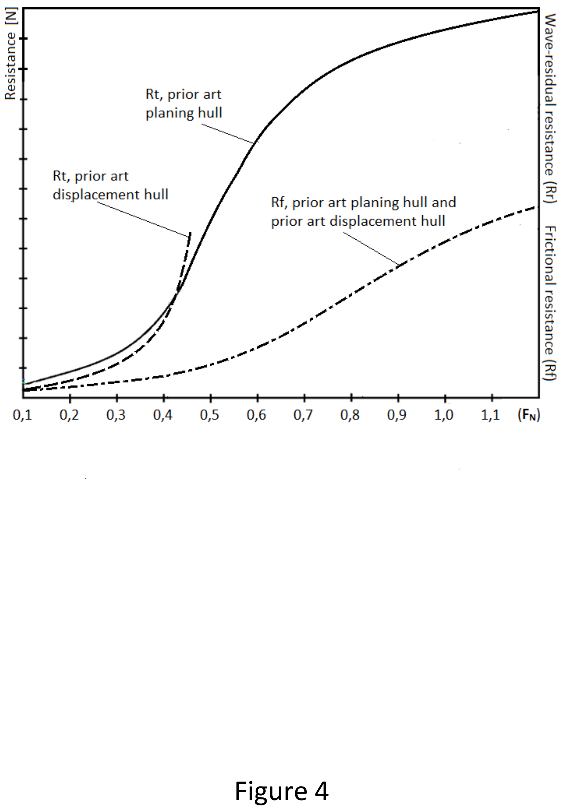

When a vessel moves at the surface of a water mass, a number of different resistance factors act against the vessel's motion. The total resistance $R_t$ in Newton *[N]* for a displacement vessel and a planing hull are illustrated in Figure 4. As can be seen, the total resistance $R_t$ consist of frictional resistance $R_f$ and residual resistance $R_r$. The vessel's speed is indicated along the x-axis as Froude's number [$F_N$].

$$F_N = \frac{Speed\ \left[\frac{m}{s}\right]}{\sqrt{9.81\ \left[\frac{m}{s^2}\right] \times Length\ of\ vessel\ [m]}} \quad (1)$$

As shown in Figure 4, the total resistance $R_t$ for both displacement and planing hulls increases rapidly with increasing speed due to a significant rise in residual resistance $R_r$.

For this reason, the speed corresponding to $F_N$ of 0.4 is often referred to as the maximum hull speed for a displacement hull. Also planing hulls, optimized and designed to be operated at a speed above the maximum hull speed for displacement hulls, experience significant residual resistance $R_r$ before it reaches planing speed.

The difference between $R_t$ and $R_f$ at a given speed represent the residual resistance, $R_r$, which mainly consist of wave resistance $R_w$.

$$R_t - R_f = R_r,$$

and for practical use: $R_r \approx R_w$.

In the speed range from around $F_N$ = 0.30 and up to around $F_N$ = 1.0, the resistance caused by wave making from the hull, $R_w$, usually is the most dominant resistance factor for most hull types. As shown in Figure 4, a typical displacement hull performs better than a planning hull and has lower total resistance $R_t$ at low speed in the range up to $F_N$ = 0.4. In the speed range $F_N$ = 0.4-0.8 the semi displacement or planing hull is most efficient even though the total resistance is increasing rapidly as the speed increases also for these vessel types.

For this reason, the transition speed range from $F_N$ = 0.4 to 0.8 has previously been very challenging in view of achieving cost efficient operation. To overcome some of the considerable rise in wave resistance, and thereby to achieve reasonable god fuel economy (resistance/speed), designers have had to design a more slender hull. For a planing hull that needs to be 'lifted' out of the water to obtain less resistance, the key objective has been to keep the weight down. This effectively limits the field of application for a planing hull. Consequently, planing hulls are primarily used for smaller and lighter vessels.

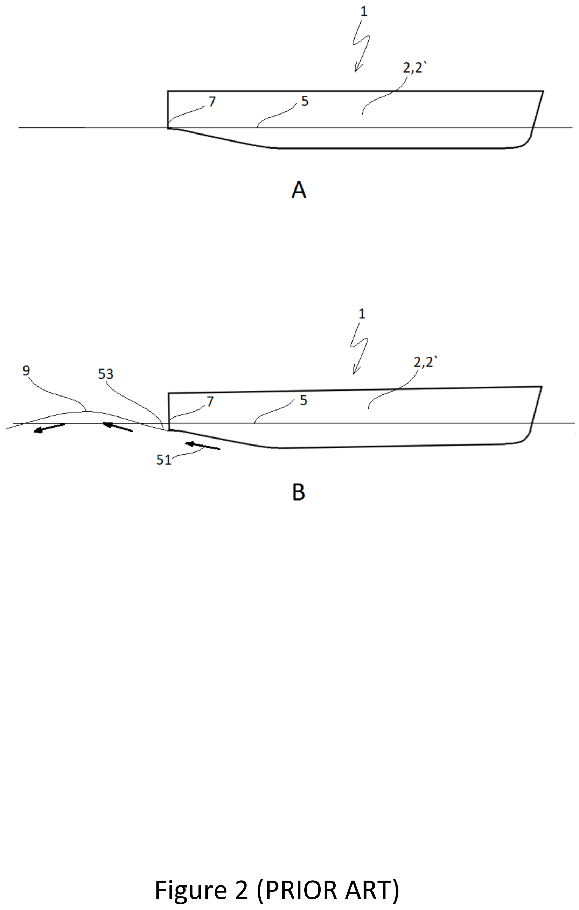

A typical prior art displacement hull optimized for speed range below $F_N$ = 0.4 has a streamlined aft hull section with reduced cross sections towards the stern of the vessel, as shown in Figure 2A. When in forward motion, the upward curved shape of the underside of the hull towards the stern gives a water flow an upward direction, thereby contributing to the formation of stern wave and a stern down trim of the vessel, as shown in Figure 2B. The upward momentum in the water flow increases as the speed of the vessel increases.

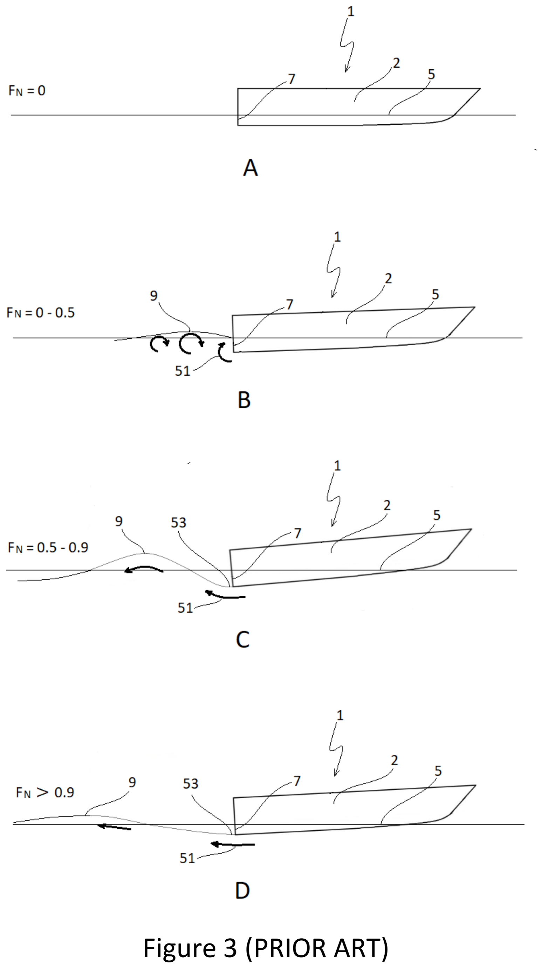

A typical prior art planing hull optimised for higher speed has a rectilinear hull shape from center towards the stern, ending in a flat transom underneath the water surface when floating motionless in a mass of water, as shown in Figure 3A. At low speed the water pressure in the water mass underneath and at the sides of the hull forces the water to rise from the bottom of the hull and fall inward from the hull sides directly behind the transom, resulting in a turbulent water flow behind the transom as shown in Figure 3B. As speed increases, the residual resistance from the aft hull section of the hull gradually changes from turbulence resistance to wave resistance. Due to pressure drop under the hull close to the transom and dynamic lift of the bow area, the sinkage aft and the trim angle of the vessel increases, as shown in Figure 3C. As shown in Figure 3C&D, a water flow separates from the hull at the transom and rises in a stern wave behind the hull. A water flow directly downstream the transom is essential horizontal or slightly downward due to positive trim of the vessel. But since the water flow surface level directly downstream the transom is below the surrounding water surface there is a state of non-equilibrium in the water mass in this region. With other words, there is a lack of equilibrium due to a difference in the water pressure directly behind the transom and the water pressure in the surrounding water masses at the same depth. This lack of equilibrium forces the water downstream the transom to rise, together with water falling inward from the hull sides. This again results in the formation of a stern wave at some distance downstream the transom, contributing to an increasing stern wave until the hull reaches a speed where the dynamic planing forces reduces the draft and rises the hull out of the water, as shown in Figure 3D.

The waves generated by the hull, together with turbulence at the stern, represent lost energy. Depending on vessel type and speed, the residual resistance typical contributes to 30-80% of the total resistance to forward motion, as shown in Figure 4. For a typical prior art displacement hull the stern alone typical contributes to 20-50% of the hull's total residual resistance. For a prior art hull optimized for a higher speed above $F_N$ = 0.5 having a significant wetted transom, the aft part of the hull often contributes to more than 50% of the total residual resistance for the hull.

It is therefore crucial to minimize the wave resistance and turbulence resistance caused by the aft hull section of the vessel to reduce the total resistance to forward motion.

## PRIOR ART

### Lifting foil

To reduce total resistance, some high-speed vessels are equipped with lifting foils. The purpose of lifting foils is to reduce the draft of the hull during high speed forward motion of the vessel, and often to lift the entire hull out of the water, thereby reducing the wave resistance for the hull and the wetted area that contributes to frictional resistance.

### Trim flaps

Trim flaps are widely used to limit a stern down trim for semi displacement and planing hulls. These flaps are usually hinged to the transom flush with the hulls underside. By adjusting the back of these flaps down at operational speed, and thereby forcing a water flow passing under the transom further down, a lift force is applied to the aft part of the hull.

### Forward propulsion from aft foil

Patent publications US 7,617,793 B2 and WO 2016/010423 A1 both describe an aft foil mounted under the water surface at the stern of a displacement vessel, wherein the aft foil develops a continuous forwardly directed propulsion force exerted onto the vessel during forward motion of the vessel and thereby reducing the total resistance of the vessel.

To achieve said continuous forwardly directed propulsion force, the aft foil must be located in an upwardly directed water flow. Furthermore, the chord line of the aft foil must be tilted sufficiently downward in respect to the horizontal.

### Small concave aft foil

Patent publication KR200440081 (Y1) describes a small concave foil having a negative chord angel located under the aft part of a vessel having a vertical transom. The transom is located under the water surface during forward motion of the vessel. The small aft foil is claimed to develop a forwardly directed propulsion force exerted onto the vessel and to reduce the turbulence and wave formation behind the wet transom, thereby reducing the propulsion resistance for the vessel.

### Guiding fins for displacement vessel

Patent publication DE 2814260 A1 describes a displacement vessel having fins located under the water surface at the bow and/or stern to suppress bow and/or stern waves.

### Negative lift from foil

Patent publication US 4,915,048 A describes a planing vessel. The vessel has a deep draft bow with a fine entrance to prevent dynamic lift from the bow. At the stern the vessel has a foil to generate a downward force to counteract the planing lift from the underside of the aft hull during forward motion of the vessel. The foil is designed to prevent the vessel from being lifted out of the water caused by the planning forces acting on the aft hull and to keep the trim angle for the vessel neutral.

## GENERAL DESCRIPTION OF THE INVENTION

### Extended description of claims

The present invention is set forth and characterized in the independent claim, while the dependent claims describe other characteristics of the invention.

In one aspect, the invention concerns a vessel for floating in a body of water.

The vessel comprises a longitudinal hull having an aft hull section and an aft body arranged at a distance from the aft hull section, thereby forming a passage between the aft body and a separation line of the aft hull section.

The term 'longitudinal hull' is hereinafter defined as a hull having a length larger than the width. Further, the separation line is hereinafter defined as a line extending in a transverse direction of the hull at which a water flow originally flowing along the hull is separated from the aft hull section above a minimum forward propulsion of the vessel, for example at maximum forward propulsion of the vessel. The separation line may for example be a step in the aft hull section upstream / in front of the hull's termination point.

Note that the term 'a line extending in a transverse direction' shall be understood to include any line having endpoints separated in the transverse direction of the hull. Hence, the separation line may be of any form such as straight, curved, zigzagged, or a combination thereof. The two endpoints of the separation line may be at the same longitudinal position of the hull and/or may be at the same height relative to a common reference level such as the water surface when the vessel is floating in the body of water.

The separation line is further defined by the hull having an abrupt change of direction in a longitudinal vertical plane of the hull. In one embodiment, said abrupt change of direction constitute a sharp edge or almost sharp edge. In another embodiment, said abrupt change of direction has a small radius, for example a radius of 50 mm or smaller.

Said aft body is defined by a maximum width measured in a horizontal plane in the transverse direction of the hull, a leading edge, a trailing edge and a chord line.

The chord line is defined as a straight line extending from the leading edge to the trailing edge in a longitudinal vertical plane of the hull. The length of the chord line may further be defined as the arithmetic mean chord line length calculated along the entire width of the aft body. In case the transverse width of the aft body is centred relative to the transverse width of the vessel's hull, said longitudinal vertical plane will be at the transverse centre line of the aft body.

The vessel further comprises a leading edge area and a trailing edge area.

The leading edge area is defined by the smaller of:

- a first area equaling a minimum distance measured in a longitudinal vertical plane of the hull between the leading edge and the aft hull section integrated across the maximum width along the leading edge and
- a second area equaling a minimum distance measured in a longitudinal vertical plane of the hull between two parallel lines integrated across the maximum width along the leading edge. Wherein the first line is defined as a tangent line of the aft hull section immediately upstream / in front of the separation line and the second line is defined as the line intersecting the leading edge. Each of the said two lines are oriented along the same longitudinal vertical plane of the hull. The measurement of the minimum distance for calculating the first area is preferably performed immediately upstream / in front of the separation line.

The definition of the first area is valid in those cases where the separation line is arranged at or downstream / aft of the leading edge. Likewise, the definition of the second area is valid in those cases where the separation line is arranged upstream / in front of the leading edge.

Note that the term 'longitudinal vertical plane' refers to a plane oriented perpendicular to a water surface when the vessel is floating motionless in the body of water and parallel to a bow-to-aft longitudinal orientation of the hull.

Alternatively, the second area of the leading edge area may be achieved by

- measuring a minimum distance in a longitudinal vertical plane of the hull between the first line and a point on the leading edge within the longitudinal vertical plane,
- repeating this measurement over the entire maximum width along the leading edge and
- integrating across the maximum width along the leading edge.

Of course, in practice, the integration over the maximum width of the leading edge is achieved based on an approximation in which a finite set of minimum distances along the leading edge is acquired, for example at least 3 minimum distances which include the two outermost points and the midpoint of the leading edge relative to the transverse direction.

The trailing edge area is defined by the area as seen from astern constrained by the trailing edge, a water surface when the vessel is floating motionless in the body of water at a predetermined load condition and two longitudinal vertical planes intersecting the two points on the surface of the aft body defining the maximum width. As an example, the trailing edge area may be measured when the vessel has no payload or more preferably also without ballast, for example without payload and ballast and with empty fuel tanks and lubricant tanks, i.e. at the lightweight waterline.

Note that the term 'the area as seen from astern' signifies a vertical cross-sectional ±area of the vessel at the trailing edge of the aft body.

Said aft body and said aft hull section is preferably mutually configured so that the leading edge area is at least 0.8 times the trailing edge area, more preferably at least 0.9 times, even more preferably at least 0.95 times, even more preferably at least 1.0 times, for example 1.1 times the trailing edge area. If average values of the leading edge area and the trailing edge area $A_{te}$ across the maximum widths of the aft body are considered, the leading edge area $A_{le}$ corresponds to a leading edge distance $H1$, and the trailing edge area $A_{te}$ corresponds to a trailing edge distance $H2$.

In this particular case, $H1$ is preferably at least 0.8 times $H2$, even more preferably at least 0.9 times $H2$, even more preferably at least 0.95 times $H2$, even more preferably at least 1.0 times $H2$, for example 1.1 times $H2$.

With the above ratio criteria between the leading edge area and the trailing edge area, a sufficient water flow is allowed to flow above the aft body's top surface to avoid, or at least significantly reduce, deviations from equilibrium in the water masses downstream the aft body during forward propulsion of the vessel. Deviation from equilibrium in the water masses immediately downstream the aft body will cause the formation of a stern wave, and thereby increase the vessel's total resistance during operation due to wave making. An insufficient amount of water over the aft body will form a depression of the water surface downstream the vessel compared to the level of the surrounding water surface. Any depression will be balanced by the surrounding water consequently contributing to the formation of the stern wave.

Another preferred criterion for reducing the vessel's total resistance is to designing the aft hull section with a double curvature in a longitudinal vertical plane of the vessel and/or such that the angel between tangent lines of the aft hull section immediately upstream / in front of the separation line in the longitudinal direction of the vessel and the water surface is kept small, preferably less than 20 degrees, more preferably less than 15 degrees, even more preferably less than 10 degrees, even more preferably less than 5 degrees, for example 0 degrees (i.e. parallel with the water surface). Such an aft hull section will ensure a minimum upward direction for a water flow in front of the aft body.

Please note that the expression "... *the separation line is located at or above the water surface"* should be interpreted from the point of view of a person skilled in the art, taking into account the measurable technical effect of such a location. Hence the expression *"at the water surface"* should not be interpreted in a strict mathematical way.

Alternatively, or in addition, at least a part of the underside of the aft body, for example the entire underside, may be arranged below the water surface at or below a depth corresponding to 60 % of the draft of the hull, for example 80 %, when the vessel is floating motionless in the mass of water. As an example, the draft of the hull may be measured when the vessel has no payload or more preferably also without ballast, for example without payload and ballast and with empty fuel tanks and lubricant tanks.

The aft body and the aft hull section is preferably configured such that, during forward propulsion of the vessel, the net force component exerted onto the vessel from the aft body in the direction of travel of the vessel is zero or negative in at least a part of the speed range the vessel is operating in, for example in more than 10 % of the vessels speed range or more preferably in more than 30 % of the vessels speed range, or even more preferably more than 50 % of the vessels speed range, or even more preferably more than 70 % of the vessels speed range, for example in the full speed range the vessel is operated in. By "the vessels speed range" is meant from 0 knots and up to the vessels maximum speed at full power. The particular design fulfilling such criteria may for example be achieved by performing model tests or full-scale tests while measuring the forces acting on the supports for the aft body to the hull. Such tests can be performed with payload or more preferably without payload.

Note that a negative net force component in the direction of travel exerted onto the vessel from the aft body as described herein means that the aft body is adding drag force to the vessel through its supports.

Examples of relevant parameters that may be adjusted to achieve a zero or negative net horizontal force component in the longitudinal direction of the vessel are:

- the depth position of the separation line when the vessel is floating motionless in a mass of water and/or
- the orientation of the chord line relative to the water surface and/or
- the design of the aft hull section, for example the tangent angle of the aft hull section in the longitudinal direction immediately upstream / in front of the separation line relative to the water surface, and/or
- the depth of the aft body relative to the vessel.

In yet another advantageous configuration, the aft body is designed to give a positive lifting force during forward propulsion of the vessel. Again, the particular design ensuring such an upward direction of the lifting force may be achieved by model tests or full-scale tests of a vessel in accordance with the invention described above.

In another advantageous configuration, the design and orientation of the aft body may be chosen such that, during forward propulsion of the vessel, the arithmetic mean direction of a resulting water flow immediately downstream of the trailing edge is orientated in the horizontal plane, i.e. parallel to the water surface, or substantially in the horizontal plane. The resulting water flow is set up by superposing a water flow passing the top surface of the aft body and a water flow passing the underside of the aft body. By such minimization of the upward or downward directed component of the resulting water flow downstream the aft body, said deviation from water flow equilibrium behind the vessel may be further reduced, which again causes a further reduction in the formation of stern waves. A horizontal water flow may be accomplished by for example orienting the chord line parallel or near parallel with said water surface when the vessel is floating motionless in a mass of water.

In an alternative configuration, the aft body may also be oriented with a chord line having a positive angle of attack relative to the water surface during forward propulsion of the vessel, for example an angle between 0° and 5° relative to the water surface, more preferable between 0° and 3°, even more preferable between 0° and 2 °, for example between 0° and 1,5 °.

In another alternative configuration, the chord line angle may even be slightly negative, for example -2 ° or -1°, as long as the result of the configuration yields a net force component exerted onto the aft body in the direction of travel of the vessel that is zero or negative as described above.

In yet another advantageous configuration, the chord line is orientated parallel with the water surface when the vessel is floating motionless in a body of water at the lightweight waterline. The term 'parallel' shall not be interpreted in its strict mathematical sense. Depending on various parameters such as the vessel's load conditions, the term 'parallel' can be interpreted as an orientation within a range ± 2° relative to the water surface, or even within ± 1° if the vessel conditions so allows. For example, if the different load conditions of the vessel results in an unchanged trim or near unchanged trim, the term 'parallel' may be interpreted narrower, even within ±0.5°.

Note that a positive angle is herein defined as an angle pointing upward in the direction of travel relative to the water surface.

In yet another advantageous configuration, the leading edge of the aft body is situated less than 20 % of the length of the chord line aft of the separation line. This particular embodiment may contribute to reduce turbulence at low speed of the vessel. More favourably the leading edge is situated less than 15 % of the length of the chord line aft of the separation or even more favourably less than 10 %, even more favourably less the 5%, for example at or upstream the separation line.

In yet another advantageous configuration, at least a part of the trailing edge, for example the entire trailing edge, is located deeper than 35 % of the maximum draft of the hull without ballast and payload when the vessel is floating motionless in a mass of water, more preferably deeper than 50 % of the maximum draft, even more preferably deeper than 60 % of the maximum draft, for example 80 % of the maximum draft.

In yet another advantageous configuration, the length of the chord line is at least equal to the draft of the hull without ballast and payload when the vessel is floating motionless in a mass of water. The cord line length is more preferably 1.2 times the draft, even more preferably 1.5 times the draft, for example 2 times the draft. By exceeding a minimum length of the chord line, turbulence on the top surface and downstream the aft body is prevented or at least significantly reduced.

In yet another advantageous configuration, at least a part of the aft body, for example the entire aft body, is located upstream / in front of the vertical projection of a rearmost point of the hull.

In yet another advantageous configuration, the leading edge, for example the entire leading edge, is situated half the length of the chord line or more upstream / in front of the separation line, more preferably 60 % of the length of the chord line or more, or even more preferably 70 % of the length of the chord line or more, for example 80 % of the length of the chord line or more, upstream / in front of the separation line. Further, the top surface and position may alternatively, or in addition, be designed such that a minimum distance in a longitudinal vertical plane of the hull between said top surface and the aft hull section upstream / in front of the separation line remains constant or near constant.

In yet another advantageous configuration, the aft body constitutes an integrated part of the vessel.

In yet another advantageous configuration, at least part of the leading edge, for example the entire leading edge, is located a horizontal length of 1/2 chord line or less downstream /aft of the separation line, more preferably less than 1/3 chord line, even more preferably less than 1/4 chord line, even more preferably less than 1/5 chord line, for example at, or immediately downstream, the separation line.

In yet another advantageous configuration at least a part of the aft hull section located downstream / aft of the separation line is situated over said water surface when the vessel is laying still and floating in a mass of water. For example, the transom of the longitudinal hull may be located at or above the water surface.

In yet another advantageous configuration, the aft body and the aft hull section is configured so that the aft body during forward propulsion will not contribute to a significant change in draft of the aft hull section. This is in clear contrast to a typical lifting foil having a shape optimized for creating such a lift and contribute to a significant decrease in draft of the hull.

In yet another advantageous configuration, the aft body is designed such that a part of a water flow flowing over the top surface of the aft body is lifted above the water surface during forward propulsion of the vessel.

In yet another advantageous configuration, the separation line is located at or above the water surface, when the vessel is laying still and floating in a mass of water in a particular load condition such as without ballast and without payload. Another possible load condition may be with maximum ballast or with maximum payload.

In yet another advantageous configuration, the vessel further comprises a bow body located at or upstream / in front of a bow area. The bow body is configured to lead the water mass passing the upper surface of the bow body away from the bow area, or essentially parallel to the bow area, or a combination thereof. The design of the bow body and the bow area may be identical or similar to the bow body described in patent publication EP3247620B1, the contents of which are incorporated herein by reference. Particular reference is made to figures 10-12 in EP3247620B1 and its related text. The proprietor of EP3247620B1 is the applicant in this application.

In yet another advantageous configuration, the aft body and the aft hull section is configured so that the draft of the hull during forward propulsion of the vessel will be at least 60 % of the draft of the hull when the vessel is floating motionless in the body of water, or more preferably at least 70 %, or more preferably at least 80 %, or more preferably at least 90 %, for example 100 %.

In yet another advantageous configuration the maximum width of the aft body measured in a horizontal plane in the transverse direction of the hull is at least 60 % of the maximum width of the hull measured at the water surface in the transverse direction of the hull when the vessel is floating motionless in the body of water, or more preferably at least 70 %, or even more preferably at least 80 %, or even more preferably at least 90 %, for example at least 100%.

In yet another advantageous configuration, the longitudinal hull is a displacement hull or a planing hull.

In yet another advantageous configuration, the aft body is located between the water surface and 100 % of the draft of the hull when the vessel is floating motionless in a mass of water.

In yet another advantageous configuration, the length of the chord line of the aft body is at least 5 % of the length between perpendiculars of the vessel (L.P.P), more preferably at least 7 %, or even more preferably at least 8 %, or even more preferably at least 9 %, for example at least 10% of the length between perpendiculars of the vessel.

### *The invention - general mode of operation*

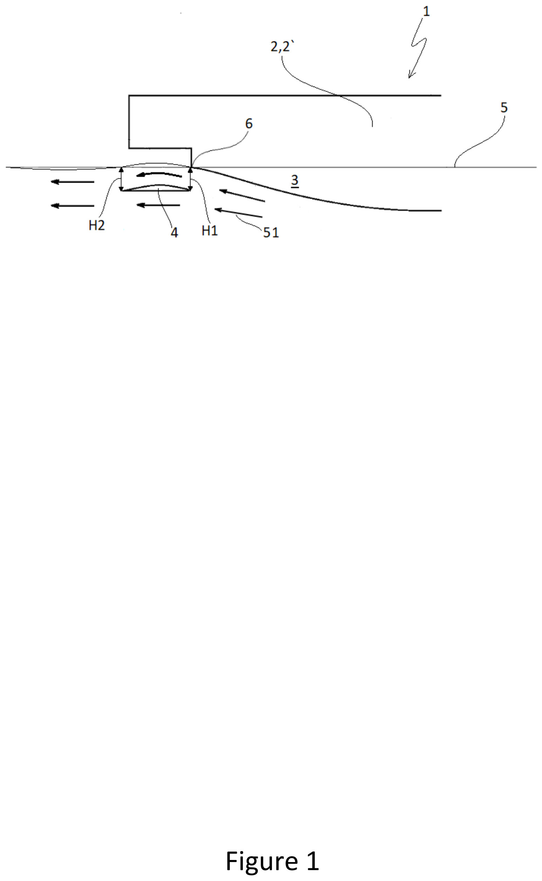

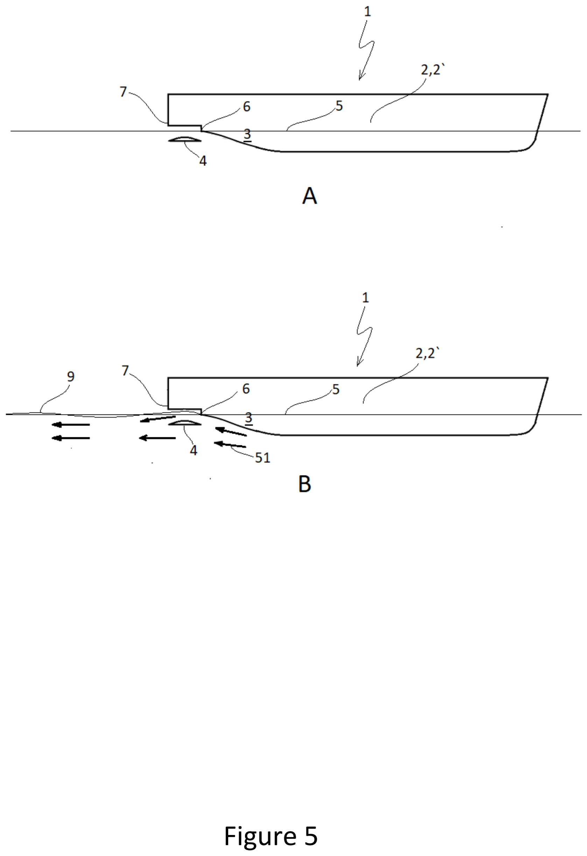

Figure 1 and Figure 5B shows the general mode of operation for one embodiment of a vessel according to the invention, where a water flow is indicated by arrows when the vessel is traveling at operational speed. The invention comprises a separation line at the aft hull section where a water flow will separate from the aft hull section during forward propulsion of the vessel. When the vessel is laying still and floating in a body of water, the separation line is located at the water surface (as seen in Figure 5A) and vertically above the leading edge of the aft body. Further, the chord line of the aft body is orientated parallel to the water surface.

During forward travel of the vessel, the upward tapered aft hull section upstream the aft body will give a water flow upstream the aft body a partly upward direction. The underside of the aft body will deflect a partly upwardly directed water flow in front of the aft body, causing a water flow under the aft body to flow in a primarily horizontal direction. The top surface of the aft body has a shape that redirects a water flow passing the top surface of the aft body from a partly upward to a horizontal or slightly downward directed water flow. The combined direction of the water flow downstream the trailing edge of the aft body, i.e. from the water flow passing over and under the aft body, then obtain an essentially horizontal direction. Hence, creation of stern wave due to the upwardly directed water flow at the aft hull section continuing in an upward direction behind the vessel is counteracted.

Further, as can be seen in Figure 1, since the height of the water flow over the leading edge of the aft body *H1* is equal to the height from the trailing edge of the aft body to the water surface H2, the water mass downstream the aft body achieves a state of equilibrium. This counteracts the creation of a stern wave due to differences in water flow surface level for the water mass immediately downstream the aft body compared to the surrounding water surface.

The aft body for a vessel according to the invention will also generate a lifting force that will prevent a stern down trim of the vessel during forward motion. The aft body of such an inventive vessel will however <u>not</u> provide a continuous forwardly directed propulsion force.

The aforementioned objects are thus achieved, namely to reduce the vessel resistance to forward motion over a wide speed range due to:

1) reduced wave resistance, and/or
2) reduced resistance due to turbulence.

The inventive vessel can be adopted to different hull types and speed ranges; from typical rounded displacement hulls operated at speeds up to around $F_N = 0.4$ as shown in Figure 2A, typical semi displacement hulls with less rounded underside and some wetted transom operating in the speed range of $F_N = 0.4$ to around $F_N = 0.9$, and planing hulls with a chine, a straight lined underside and a transom extending under the water surface as shown in Figure 3A, typically operated in the speed range above $F_N = 0.9$.

The working principal of the inventive vessel is in general the same regardless of speed range and type of vessel. However, the type of vessel and operational cruising speed should be taken into consideration when designing and optimising the geometry of the inventive vessel to a specific hull and to a specific speed range as described later.

When applied to a traditional prior art displacement hull, the inventive vessel counteracts the upward directed water flow and the generation of a stern wave downstream the hull and to reduce turbulence under and behind the aft hull section, as shown in Figure 5B.

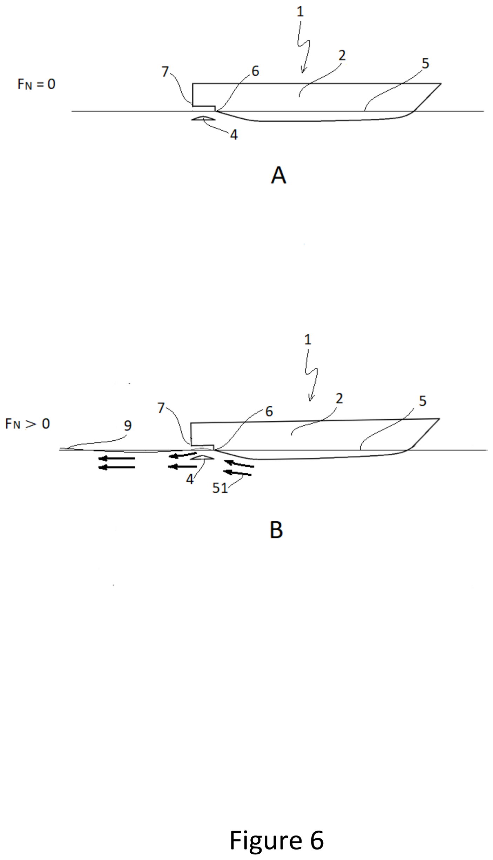

When applied to a vessel with wetted transom below the water surface, like a semi displacement or a planing hull, the invention prevents turbulent flow behind the transom at low speed. At higher speed, when the water starts to separate from the hull behind the flat transom, the inventive vessel will effectively prevent the rise of water behind the hull and thereby counteract creation of stern wave, as shown in Figure 6B.

For a typical prior art displacement hull with a streamlined aft hull section, the inventive vessel will usually contribute to reduced propulsion resistance from a speed corresponding to approximately $F_N = 0.17-0.20$ and up. For a typical prior art semi displacement or a planing hull, the inventive vessel will usually contribute to reduced propulsion resistance from stand still and all the way up to a speed exceeding $F_N = 1.0$.

### *Differences from prior art*

With reference to the description above, the inventive vessel differs from the above described prior art vessels in the following ways:

*Lifting foil:*

Prior art vessels with lifting foils reduce the propulsion resistance at high speed by lifting the prior art vessel partly or fully out of the water during operation. A prior art vessel will typical have two lifting foils, one at the front of the vessel and one towards the stern. Both foils will be located deep under the baseline of the hull to avoid that the low pressure on the top side of the foil has a negative impact on the hull (i.e. "sucking" the hull down).

Furthermore, the lifting foils must stay submerged when the prior art vessel is lifted out of the water. If the lifting foils during high speed operation is located close to the water surface they will generate waves and also generate less lift. At low speed the lifting foils will increase the propulsion resistance of the prior art vessel considerably.

In contrast, the inventive vessel is designed to maintain the same draft whether it is laying still and floating in a body of water or traveling at operational speed. The inventive vessel lowers the resistance over a broad speed range, starting from low speed. Furthermore, the inventive vessel will have the aft body located between the base line of the hull and the water surface.

*Trim flaps :*

The use of trim flaps is common in prior art vessels to limit the change in trim of semi-displacement and planing hulls due to forward motion of the vessel. By orienting the aft part of these flaps downward at speed, and forcing a water flow passing under the transom further down, a lift force is applied to the aft hull section. The downward directed trim flap effectively lowers the water flow surface level downstream the trim flaps, thereby increasing the distance to equilibrium between a water flow downstream the trim flap and the surrounding water surface. The trim flaps hence contribute to increased stern wave behind the prior art vessel, resulting in increased wave resistance.

The inventive vessel also has the ability to counteract an aft down trim of the vessel, but the wave formation is considerably less compared to prior art vessel with trim flaps. A trim flap does not have a water flow over the top side of the trim flaps during forward motion of the vessel, nor a leading edge, a passage or a leading edge area $A_{le}$ as defined herein.

*Forward propulsion from aft foil*

Both patent publication US 7,617,793 B2 and patent publication WO 2016/010423 A1 discloses a displacement hull having an aft foil fixed to the aft part of the prior art vessel which is configured to generate a continuous forwardly directed propulsion force actin on the vessel during forward motion of the vessel.

To achieve said propulsion force, the aft foil has to be mounted in a sufficiently upwardly directed water flow during forward motion of the prior art vessel (as documented by model tests later in this document). An upwardly directed water flow can be achieved:

   1) if the aft hull section has steep tangent lines in the longitudinal direction of the hull upstream / in front of the separation line, and/or

   2) if the separation line where a water flow separates from the aft hull section during forward motion of the vessel is located sufficiently deep under the water surface, as this will cause a water flow to "shoot" upwards downstream the separation line during forward travel of the vessel to achieve a state of equilibrium in the water masses behind the separation line.

In addition, the chord line of the aft foil must be tilted sufficiently downward in the upwardly directed water flow for the aft foil to be able to generate a continuous forward propulsion force.

The inventive vessel is not designed with an aft body being configured to generate a continuously forwardly directed propulsion force. (Also this is documented by model tests later in this document.)

Prior art vessels disclosed in both patent publication US 7,617,793 B2 and patent publication WO2016/010423 A1 are not designed to lead a sufficient amount of water over the aft foil during forward motion of the vessel. I.e., the leading edge area $A_{le}$ (as herein defined) of the prior art vessel is smaller than 0.8 times the trailing edge area $A_{te}$ (as herein defined). Accordingly, a water flow passing over the trailing edge of the aft foil is too small to achieve equilibrium in the water mass downstream the aft foil. In fact, it is an objective when designing the prior art vessels to locate the separation line below the water surface when the vessel is lying motionless in a mass of water to achieve the upwardly directed water flow downstream the separation line during forward motion of the vessel. Accordingly, it is an objective when designing the prior art vessels to keep the $A_{le}$ divided by $A_{te}$ ratio small. This is in clear contrast to the inventive vessel where the objective is to have the $A_{le}$ divided by $A_{te}$ ratio close to 1 to achieve equilibrium in the water mass downstream the aft body.

Aft hull sections of the prior art vessels according to US 7,617,793 B2 are designed with a large angel $\beta$, being the angel between the tangent line of the aft hull section immediately upstream / in front of the separation line in the longitudinal direction of the vessel and the water surface, to achieve a sufficiently upwardly directed water flow upstream the aft foil. This is in clear contrast to the inventive vessel where the objective is to direct a water flow horizontally downstream the aft body.

Aft foils of the prior art vessels disclosed in both patent publication US 7,617,793 A1 and patent publication WO 2016/010423 A1 are configured with a downward pointing chord line angle in relation to the water surface to generate a continuously forwardly directed propulsion force. The downward pointing chord line contributes to give the water flow passing the aft body's underside and top surface an upward direction. This is in clear contrast to the inventive vessel, which has an aft body with a chord line essentially parallel to the water surface to counteract such an upward directed water flow, thereby counteracting the formation of a stern wave.

The prior art vessels for some of the embodiments in patent publication US 7,617,793 A1 are designed such that the minimum distance, in the longitudinal vertical plane of the vessel, between the top surface of the aft foil and the aft hull section upstream / in front of the separation line is changing (i.e. not constant). This results in a retardation of a water flow from the leading edge of the aft foil over a part of the top surface of the aft foil during forward motion of the prior art vessel. This reduction in the velocity of the water flow passing over a part of the aft foil is adding drag to the vessel. In contrast, an embodiment of the inventive vessel has a geometry of the aft hull section and the aft body's top surface that is designed to prevent such a retardation of the water flow by having a constant minimum distance (in the longitudinal vertical plane of the vessel, between the top surface of the aft foil and the aft hull section upstream / in front of the separation line).

The vessels disclosed in both patent publication US7,617,793 A1 and patent publication WO2016/010423 A1 are adapted only to displacement hulls, while the inventive vessel is adapted to both displacement hulls and planing hulls.

*Small concave foil*

Patent publication KR200440081 (Y1) describes a small concave foil located under the aft hull section of a vessel, where a vertical transom extent under the water surface during forward travel of the vessel. The objective of this solution is to reduce the wave formation and the turbulence behind a wet transom and to generate a forward thrust force acting on the small aft concave foil during forward motion of the vessel. Furthermore, the small concave foil is claimed to increase the pressure at the periphery of the leading edge of the small concave foil, thereby reducing stern down trim of the vessel.

In contrast to the inventive vessel, this prior art vessel does not achieve equilibrium for the water mass downstream the small concave foil during forward motion of the vessel. The leading edge area $A_{le}$ of the small concave foil is shown to be about 0.5 times the trailing edge area $A_{te}$ of the small concave foil.

The prior art vessel is designed such that the minimum distance, in the longitudinal vertical plane of the vessel, between the top surface of the small concave foil and the aft hull section upstream / in front of the separation line (i.e. the transom) is changing (i.e. it is not constant), in contrast to the inventive vessel.

The inventive vessel does not include a wetted transom where the aft foil's trailing edge is situated underneath the transom in contrast to the prior art vessel as shown in KR200440081 (Y1).

The inventive vessel is not designed to increase the pressure at the periphery of the leading edge of the aft concave foil, thereby reducing the resistance on the vessel, in contrast to the prior art vessel having a small concave foil.

The prior art vessel according to KR200440081 (Y1) is designed to generate a forward component Lx of the lift forces L, generating a horizontal forwardly directed thrust force acting on the small concave foil. The inventive vessel is not designed to generate a forwardly directed thrust force acting on the aft body.

The maximum width of the small concave foil measured in a horizontal plane in the transverse direction of the hull is only about 15 % of the maximum width of the hull, in contrast to the width of the aft body which in one embodiment is at least 50%, preferably close to 100%, of the width of the hull.

*Guiding fins for displacement vessel*

Patent publication DE 2814260 A1 describes a displacement vessel having fins located under the water surface at the bow and/or of the vessel stern to suppress bow and/or stern waves, thereby reducing the wave resistance.

As can be seen from the figures in DE 2814260 A1, the prior art vessel does not have a separation line as defined herein. I.e. that the separation line has an abrupt change of direction in a longitudinal vertical plane of the hull. Nor does the description of DE 2814260 A1 mention anything about a separation line.

In contrary, the inventive vessel includes a defined separation line, which is of vital importance to control a water flow behind the hull at different speeds for the vessel, and to avoid that a water flow will try to follow the shape of the hull giving the water flow an upward direction (i.e. the Coanda effect).

Furthermore, the inventive vessel has a superior speed range and is designed to minimize vortexes and turbulence created by the aft foil in the water flow.

*Negative lift from foil*

Patent publication US 4,915,048 A describes a planing vessel. The vessel has a deep draft bow with a fine entrance. At the stern the vessel has a foil to generate a downwardly directed force to counteract the planing lift from the underside of the hull during forward motion of the vessel. In contrary, the inventive vessel includes an aft body where the force from the aft body acts in the opposite direction to the publication US 4,915,048 A. The aft body of the inventive vessel imposes a lifting force to the aft hull section that counteracts a stern down trim of the vessel as speed increases.

## BRIEF DESCRIPTION OF THE DRAWINGS

**Figure 1** is a schematic side view illustration of the aft hull section of the vessel in Figure 5 showing the general mode of operation for the invention when the vessel is traveling at operational speed.

**Figure 2A&B** show a typical prior art displacement hull, wherein Figure 2A is a longitudinal vertical plane of the displacement hull at rest and Figure 2B is a longitudinal vertical plane illustration of the displacement hull in motion, further illustrating the upward direction of a water flow at the aft hull section and the formation of a stern wave.

**Figure 3A-D** are longitudinal vertical plane illustrations of a typical planing hull according to the prior art, at increasing Froude numbers ($F_N$), wherein Figure 3A shows a submerged planing hull situated motionless in a body of water, Figure 3B shows the formation of a stern wave and turbulent reversed water flow behind the planing hull at low (displacement mode) speed ($F_N = 0-0.5$), Figure 3C shows the formation of the stern wave at medium (transition mode) speed ($F_N = 0.5-0.9$) and Figure 3D shows the formation of the stern wave at high (planing mode) speed ($F_N > 0.9$).

**Figure 4** show a graphic illustration of typical frictional resistance $R_f$ and total resistance $R_t$ as function of the Froude number ($F_N$) for a prior art displacement hull and planing hull.

**Figure SA&B** show the behaviour of a displacement hull according to the invention, wherein Figure 5A is an illustration in a longitudinal vertical plane of the displacement hull at rest and Figure 5B is an illustration in a longitudinal vertical plane of the displacement hull in forward motion, further illustrating the direction of a water flow at the aft hull section and the formation of a reduced stern wave.

**Figure 6A&B** are illustrations in longitudinal vertical planes of a planing hull with an aft body according to the invention, wherein Figure 6A shows the planing hull floating motionless in a body of water and Figure 6B shows the formation of a reduced stern wave behind the planing hull at speed ($F_N > 0$).

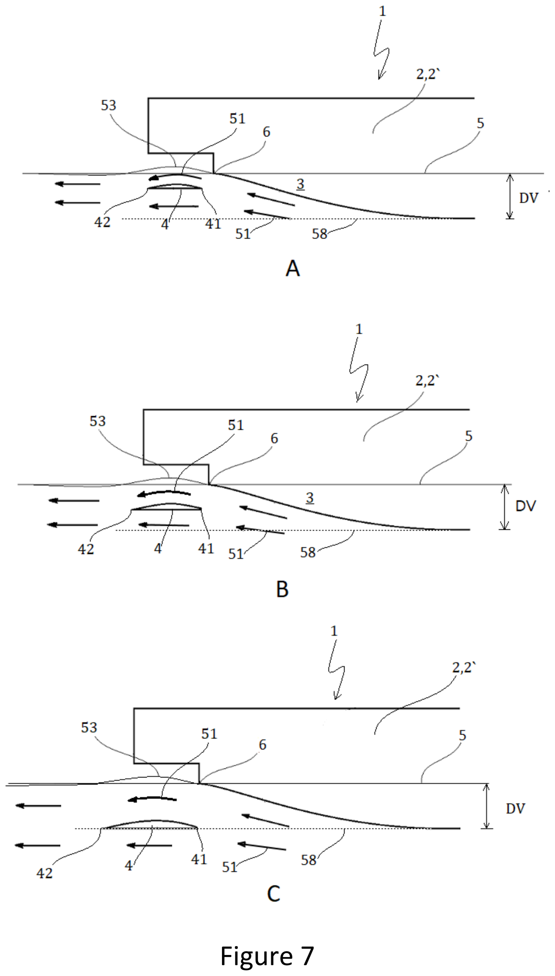

**Figure 7A-C** are illustrations in a longitudinal vertical plane of an aft hull section of a vessel in accordance with the invention, submerged in a body of water, wherein Figure 7A shows the aft hull section designed for low speed ($F_N < 0.4$) where the aft body is located closer to the water surface, Figure 7B shows the aft hull section designed for medium speed ($F_N = 0.4-0.6$) where the aft body is located at medium depth and Figure 7C shows the aft hull section designed for high speed ($F_N > 0.6$) where the aft body is located at same depth as the base line of the hull.

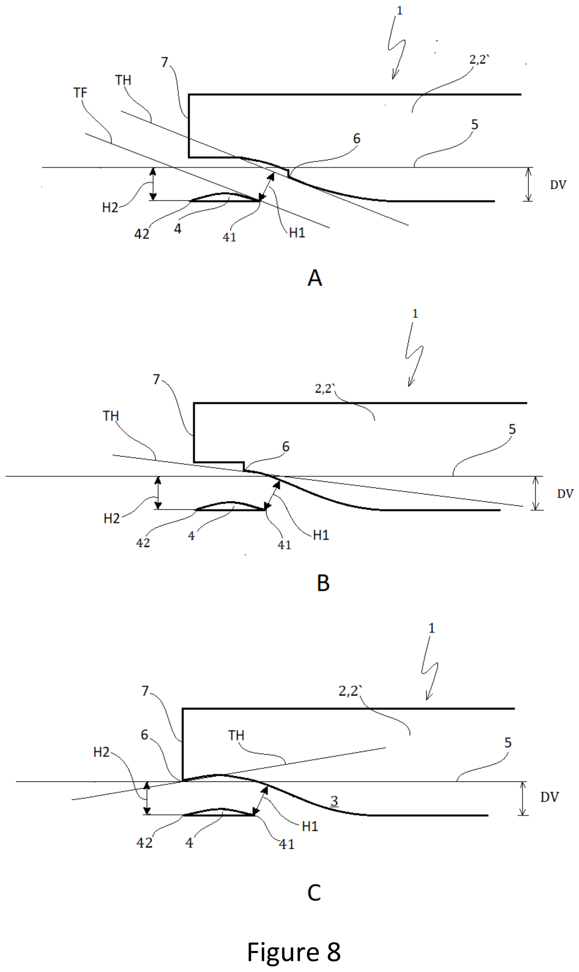

**Figure 8A-C** are illustrations in longitudinal vertical planes of aft hull sections of vessels in accordance with the invention, submerged in a body of water, wherein Figure 8A shows a separation line in the aft hull section arranged upstream / in front of the aft body, Figure 8B shows the separation line arranged above the aft body and Figure 8C shows the separation line arranged at the transom of the hull and above the trailing edge of the aft body.

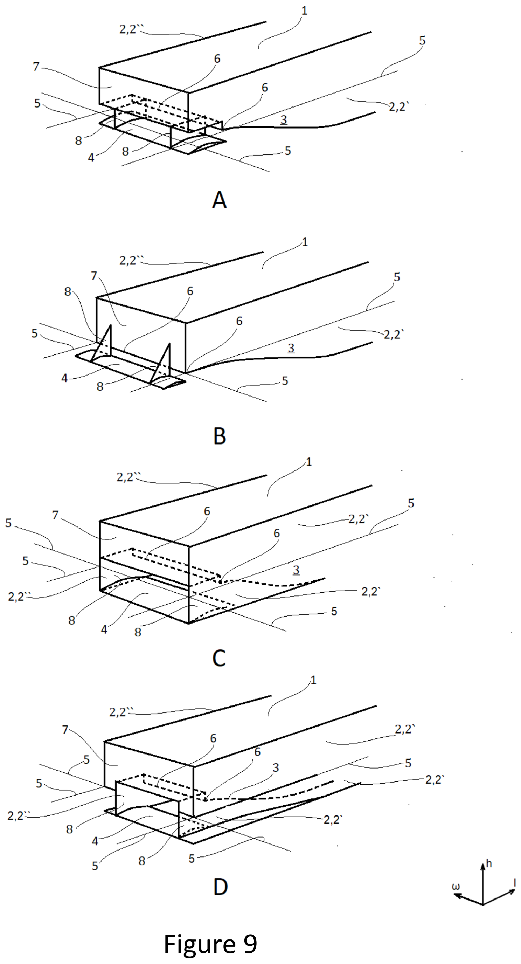

**Figure 9A-D** are perspective illustrations seen obliquely from behind of aft hull sections of vessels in accordance with the invention, wherein Figure 9A shows an aft body arranged with its trailing edge below the transom of the hull, Figure 9B shows an aft body arranged with its leading edge below the transom of the hull, Figure 9C shows a vessel with the hull sides continuing in a straight line all the way back to the trailing edge of the aft body and Figure 9D shows a vessel where the hull sides below a water surface is sloping towards the longitudinal centre line of the vessel and continuing all the way back to the trailing edge of the aft body.

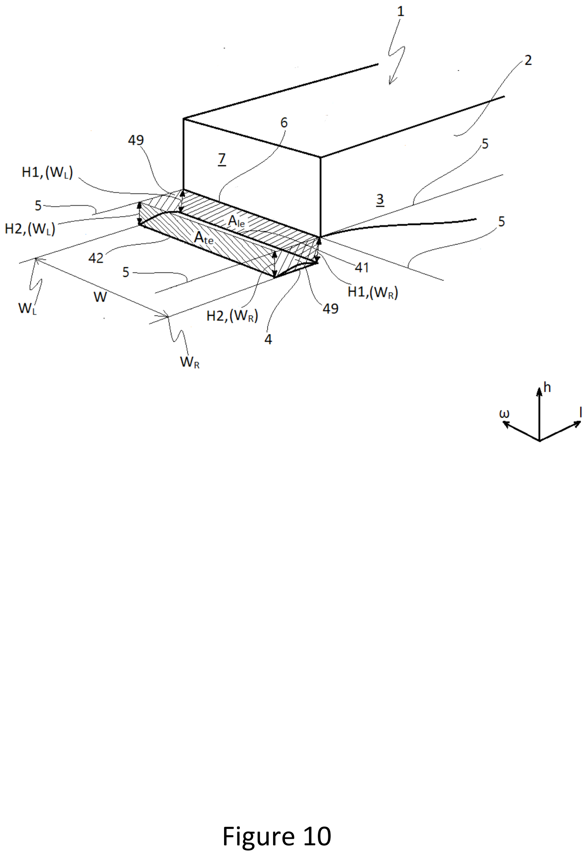

**Figure 10** is a perspective illustration seen obliquely from behind of an aft hull section in accordance with the invention where the leading edge of the aft body is located straight under the transom, showing a leading edge area ($A_{le}$) and a trailing edge area ($A_{te}$) as herein defined.

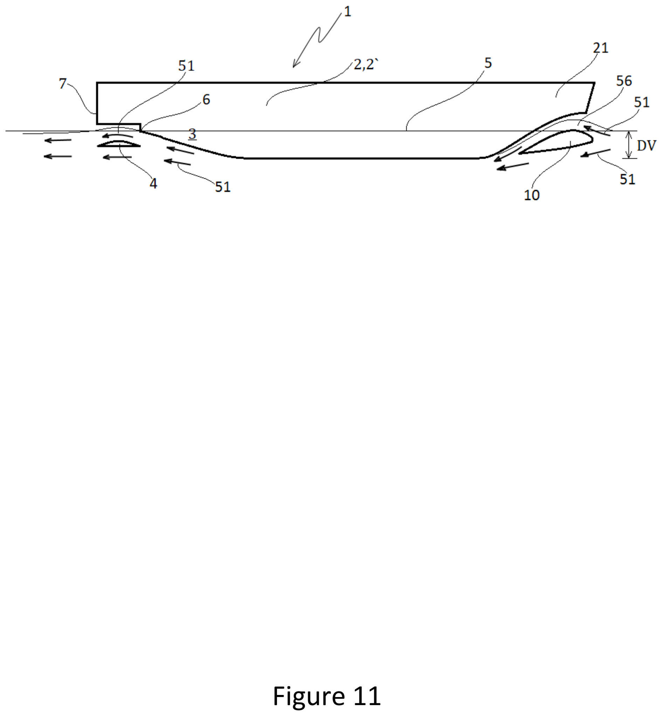

**Figure 11** is an illustration in a longitudinal vertical plane of a hull in accordance with the invention submerged in a body of water wherein the position and alignment of an aft body and a bow body, according to the applicant's patent EP3247620B1, and their effect on a water flow during forward propulsion of the vessel.

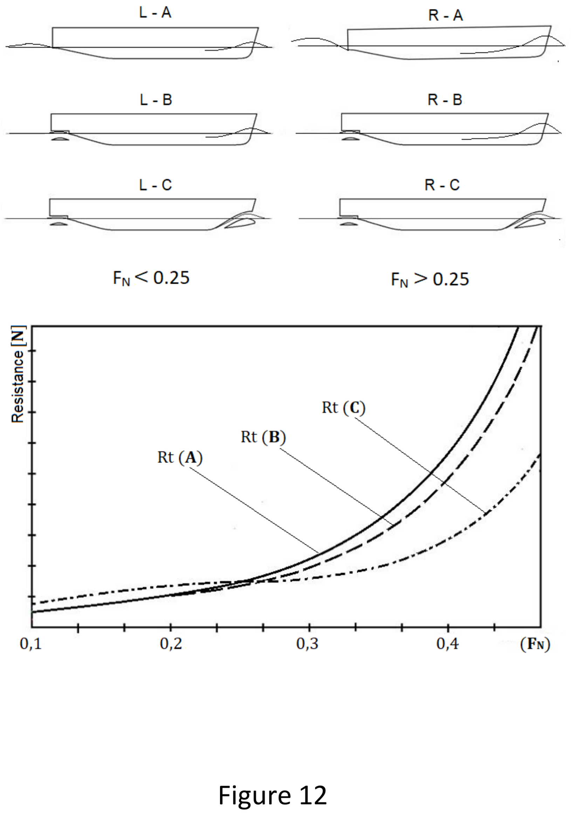

**Figure 12** show a graphic illustration of typical total resistance $R_t$ as function of Froude number ($F_N$) derived from numerous model tests performed on models, wherein the upper left figure (L-A) is an illustration in a longitudinal vertical plane of a typical displacement vessel according to prior art moving at low speed ($F_N < 0.25$), the middle left figure (L-B) is an illustration in a longitudinal vertical plane of a displacement vessel with an aft body according to the invention moving at low speed ($F_N < 0.25$), the lower left figure (L-C) is an illustration in a longitudinal vertical plane of a displacement vessel with an aft body according to the invention and a bow body moving at low speed ($F_N < 0.25$). The upper right figure (R-A) is an illustration of the prior art displacement vessel in the upper left figure (L-A) moving at higher speed ($F_N > 0.25$), the middle right figure (R-B) is an illustration of the displacement vessel in the middle left figure (L-B) moving at higher speed ($F_N > 0.25$), the lower right figure (R-C) is an illustration of the displacement vessel in the lower left figure (L-C) moving at higher speed ($F_N > 0.25$). The graph indicates the total resistance $R_t$ in Newton as function of the Froude number ($F_N$) for the three vessels where the prior art displacement vessel (L-A and R-A) is marked with a solid line and with reference Rt(A), the inventive displacement vessel with the aft body (L-B and R-B) is marked with a stippled line and with reference Rt(B) and the inventive displacement vessel with an aft body and a bow body (L-C and R-C) is marked with a dotted line and with reference Rt(C).

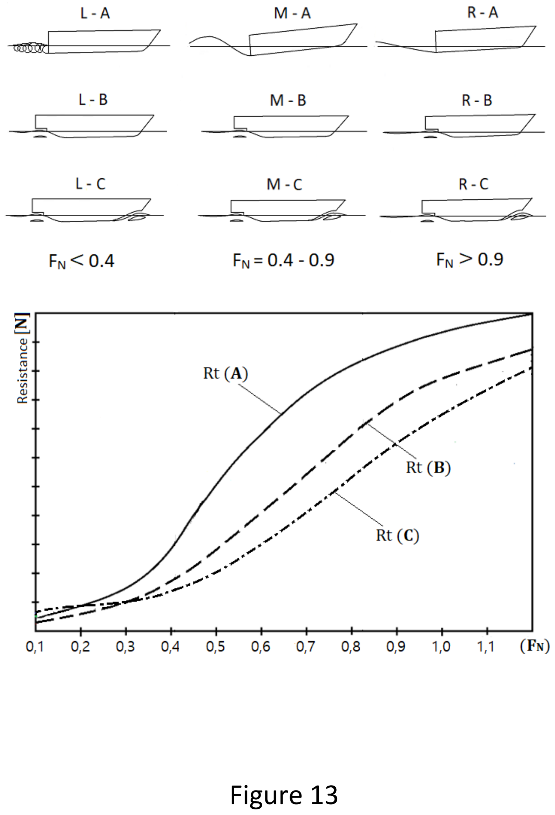

**Figure 13** show a graphic illustration of typical total resistance $R_t$ as function of Froude number ($F_N$) derived from numerous model tests performed on models, wherein the upper left figure (L-A) is an illustration in a longitudinal vertical plane of a typical planing vessel according to the prior art moving at a displacement mode speed ($F_N < 0.4$), the middle left figure (L-B) is an illustration in a longitudinal vertical plane of a planing vessel with an aft body according to the invention moving at a displacement mode speed ($F_N < 0.4$), the lower left figure (L-C) is an illustration in a longitudinal vertical plane of a planing vessel with an aft body according to the invention and a bow body moving at a displacement mode speed ($F_N < 0.4$). The upper centre figure (M-A) is an illustration of the prior art planing vessel in the upper left figure (L-A) moving at a transition mode speed ($F_N = 0.4\text{-}0.9$), the middle centre figure (M-B) is an illustration of the planing vessel in the middle left figure (L-B) moving at a transition mode speed ($F_N = 0.4\text{-}0.9$), the lower centre figure (M-C) is an illustration of the planing vessel in the lower left figure (L-C) moving at a transition mode speed ($F_N = 0.4\text{-}0.9$). The upper right figure (R-A) is an illustration of the prior art planing vessel in the upper left figure (L-A) moving at a planing mode speed ($F_N > 0.9$), the middle right figure (R-B) is an illustration of the planing vessel in the middle left figure (L-B) moving at a planing mode speed ($F_N > 0.9$), the lower right figure (R-C) is an illustration of the planing vessel in the lower left figure (L-C) moving at a planing mode speed ($F_N > 0.9$). The graph indicates the total resistance $R_t$ in Newton as function of the Froude number ($F_N$) for all the three vessels where the prior art planing vessel (L-A, M-A and R-A) is marked with a solid line and with reference Rt(A), the inventive planing vessel with the aft body (L-B, M-B and R-B) is marked with a stippled line and with reference Rt(B) and the inventive planing vessel with the aft body and the bow body (L-C, M-C and R-C) is marked with a dotted line and with reference $Rt$(C).

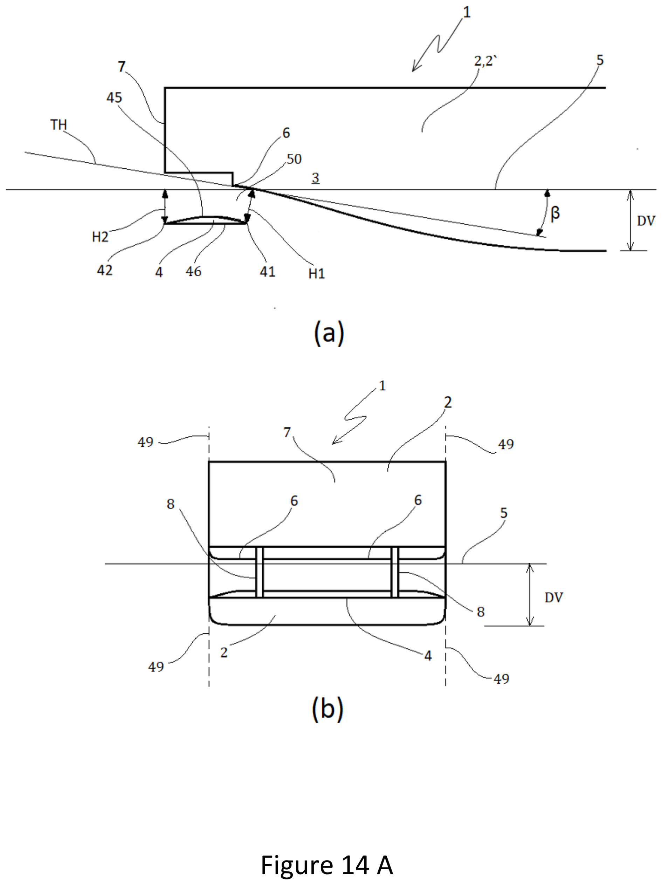

**Figure 14A** shows a schematic illustrations of an aft hull section of the vessel in accordance with the invention, wherein drawing (a) shows a longitudinal vertical plane of the aft hull section and the position and alignment of an aft body arranged with its leading edge upstream / in front of the separation line and drawing (b) shows drawing (a) seen from behind.

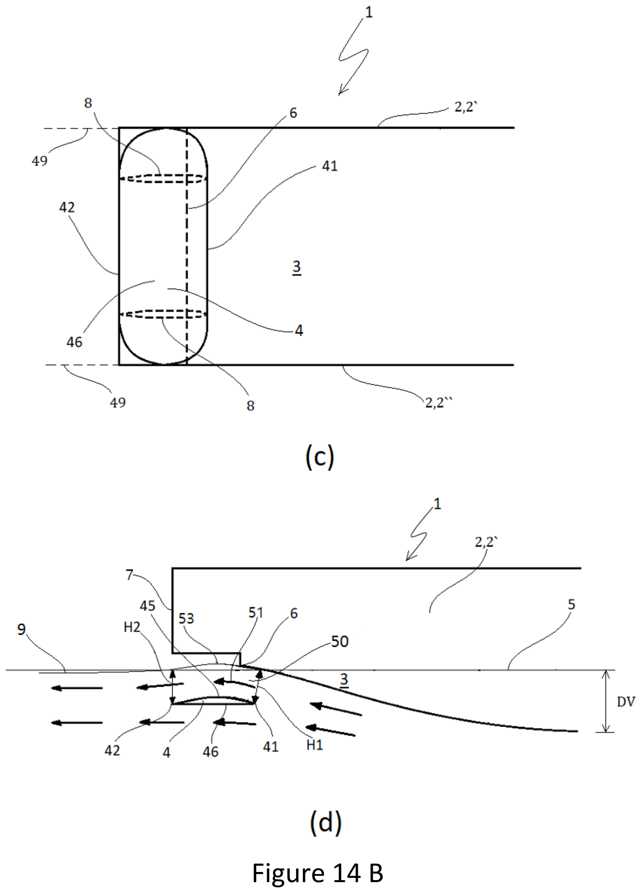

**Figure 14B** drawing (c) shows the aft hull section shown in Figure 14A seen from below and drawing (d) shows the aft hull section of Figure 14A drawing (a) illustrating a water flow during forward propulsion of the vessel.

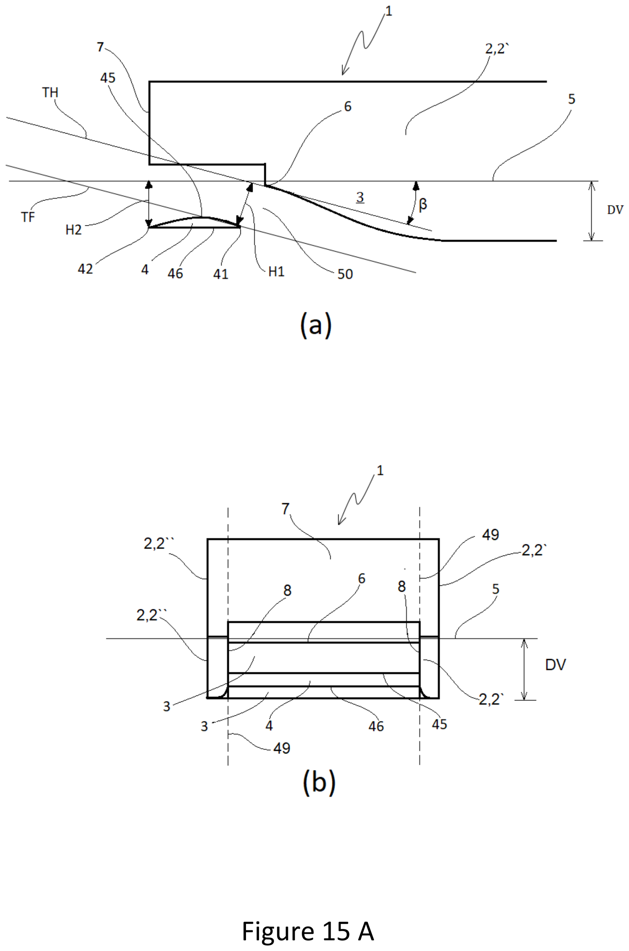

**Figure 15A** shows a schematic illustrations of an aft hull section of the vessel in accordance with the invention, wherein drawing (a) shows a longitudinal vertical plane of the aft hull section and the position and alignment of an aft body arranged with its leading edge downstream / aft of the separation line and drawing (b) shows the aft hull section shown in drawing (a) seen from behind.

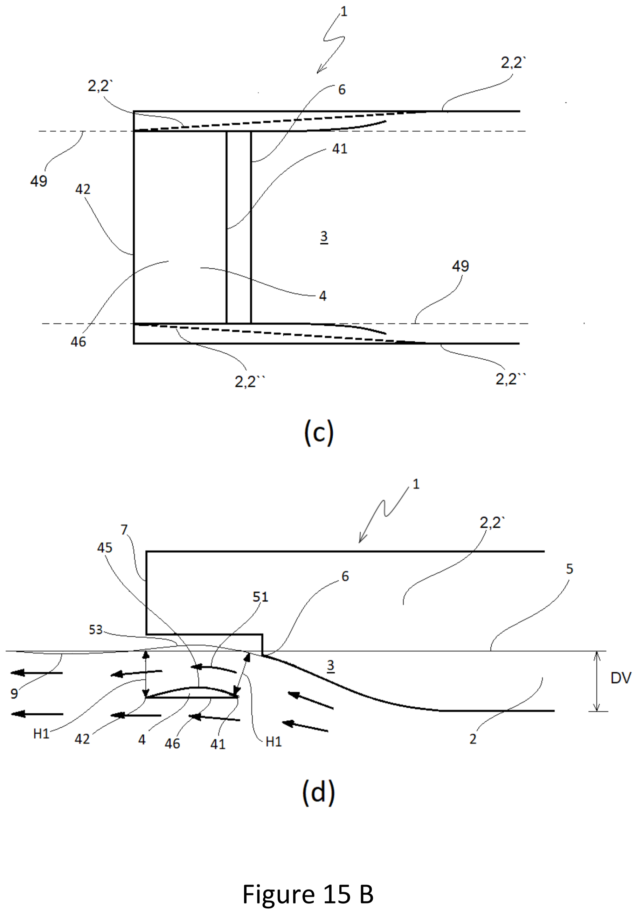

**Figure 15B** drawing (c) shows the aft hull section shown in Figure 15A seen from below and drawing (d) shows the aft hull section of Figure 15A drawing (a) illustrating a water flow during forward propulsion of the vessel.

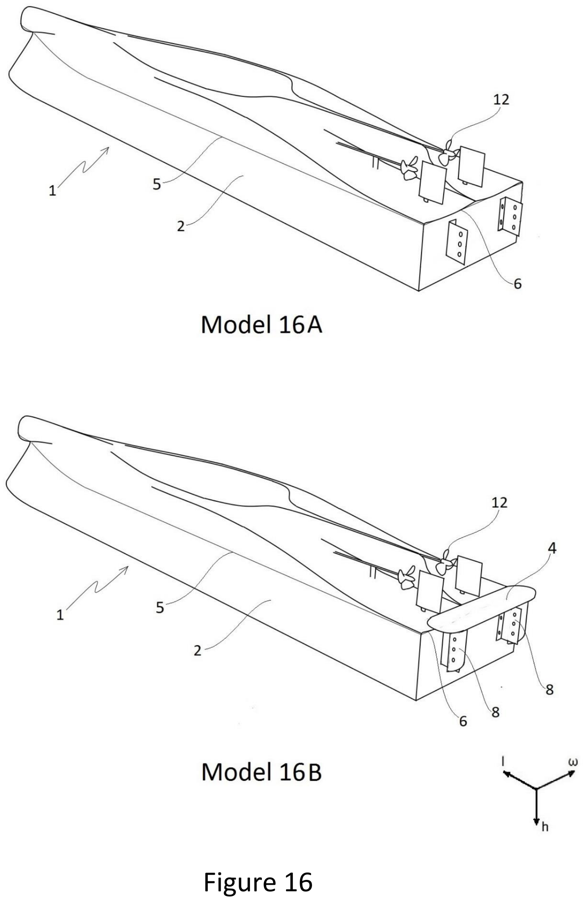

**Figure 16** are showing upside down perspective illustrations of a model vessel with a slender displacement hull, wherein Model 16A shows a prior art model vessel and Model 16B is the same model as Model 16A but fitted with an aft body according to the invention.

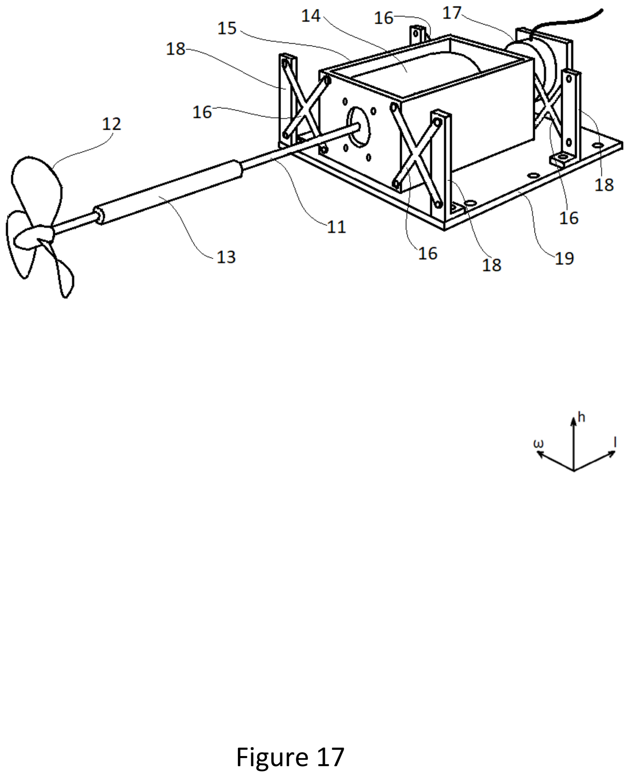

**Figure 17** is a perspective illustration of a propulsion system arranged on model vessels to measure propulsion thrust in Newton [N].

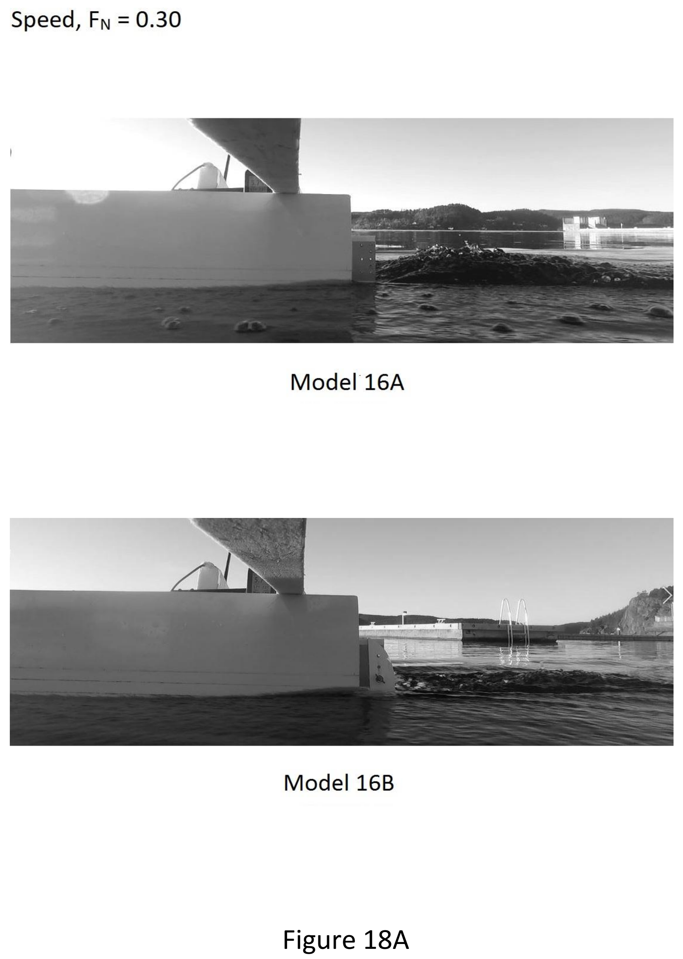

**Figure 18A** are two pictures from model tests showing the formation of stern waves of Model 16A and Model 16B at speed corresponding to Froude number ($F_N$) 0.30.

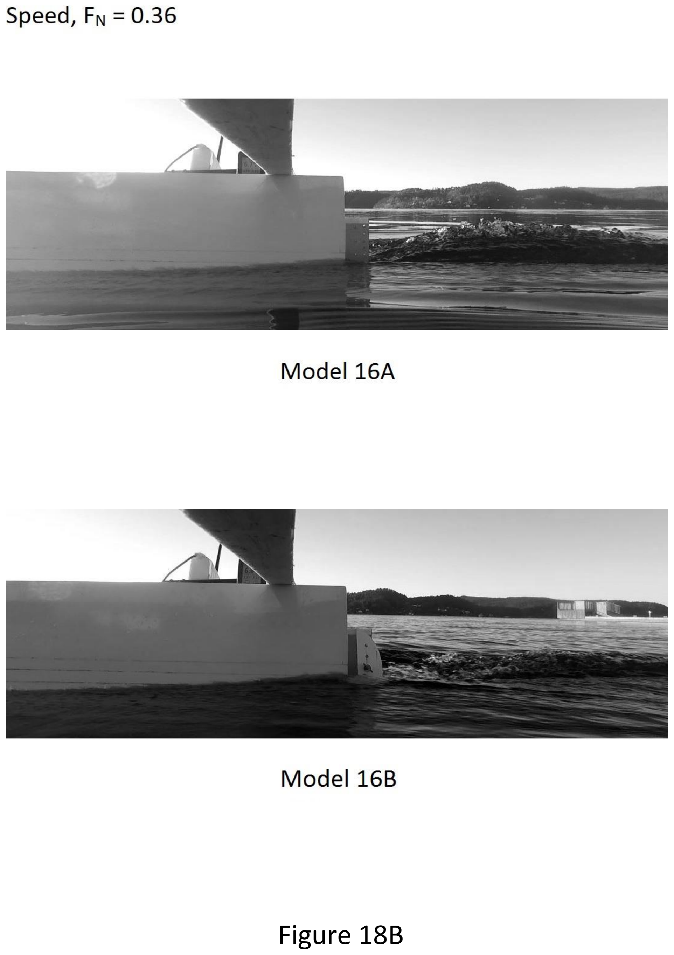

**Figure 18B** are two pictures from model tests showing the formation of stern waves of Model 16A and Model 16B at speed corresponding to Froude number ($F_N$) 0.36.

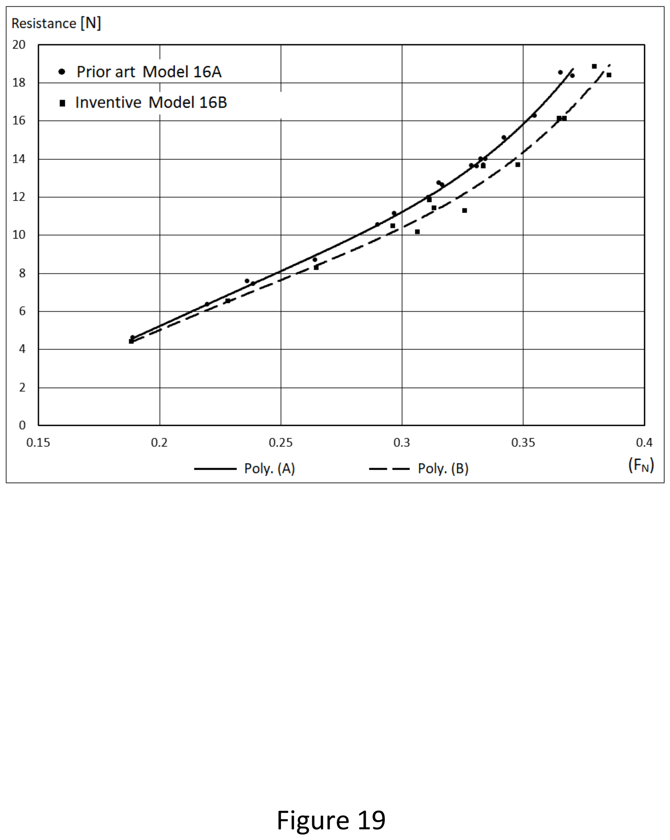

**Figure 19** shows the total resistance $R_t$ as function of Froude number ($F_N$) derived from model testing of the prior art Model 16A and the inventive Model 16B.

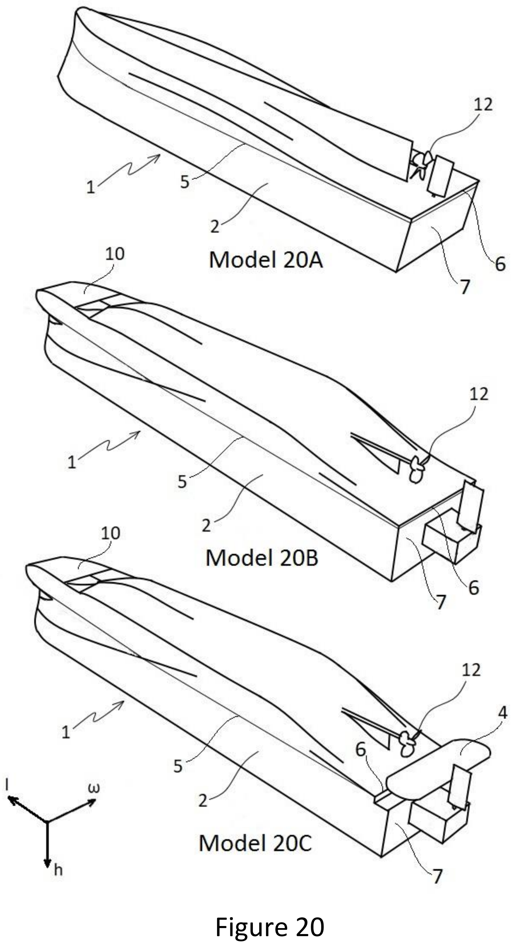

**Figure 20** shows upside down perspective illustrations of three different model vessels being compared in model tests, where Model 20A shows a prior art model vessel with a displacement hull, Model 20B shows a prior art model vessel with a displacement hull and a bow body, the model having the same length and displacement as the Model 20A. Model 20C shows an inventive model vessel which is the same as Model 20B except for the separation line and the aft body.

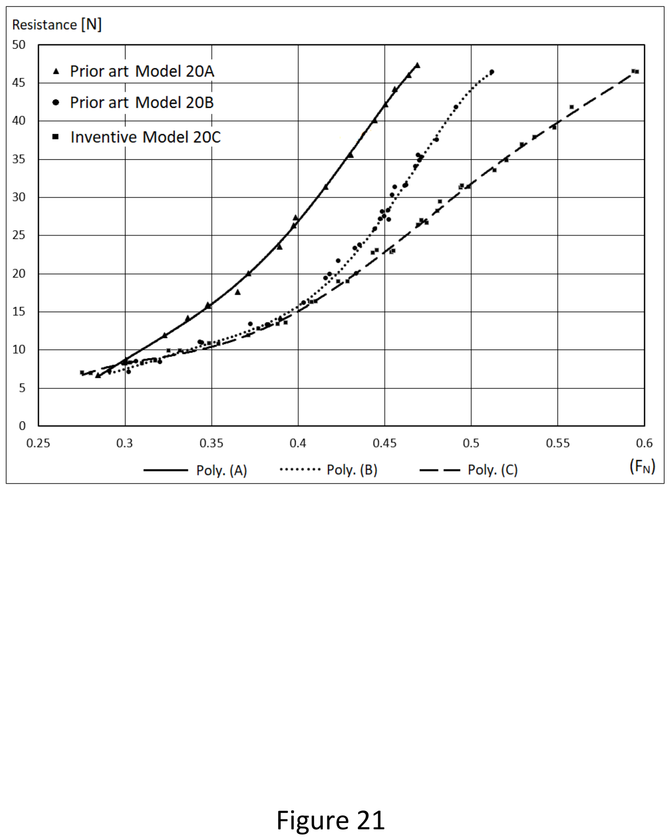

**Figure 21** shows the total resistance $Rt$ as function of Froude number ($F_N$) derived from model tests of the prior art Model 20A, the prior art Model 20B and the inventive Model 20C.

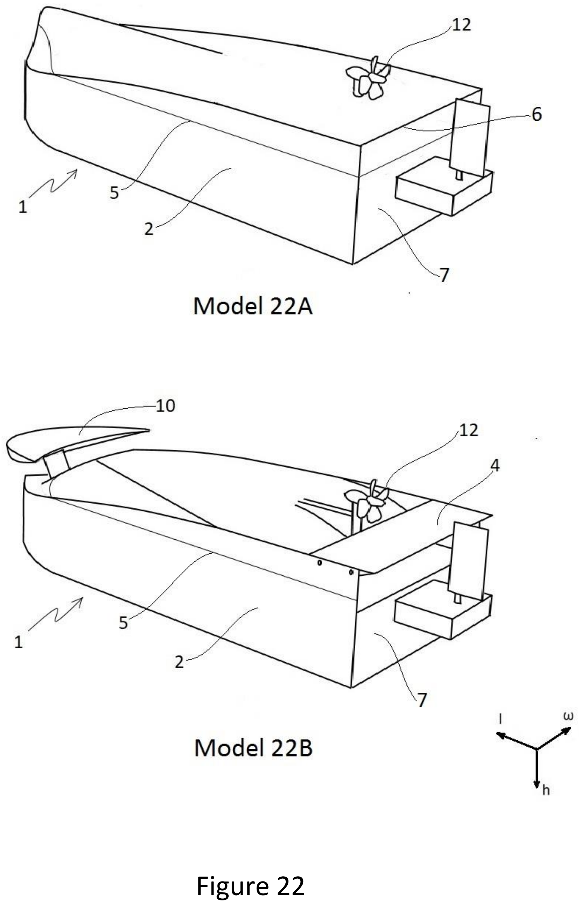

**Figure 22** shows upside down perspective illustrations of two model vessels, wherein Model 22A shows is a prior art model vessel with planning hull and Model 22B is an inventive model vessel with same length, width and displacement as Model 22A but having a bow body and an aft body.

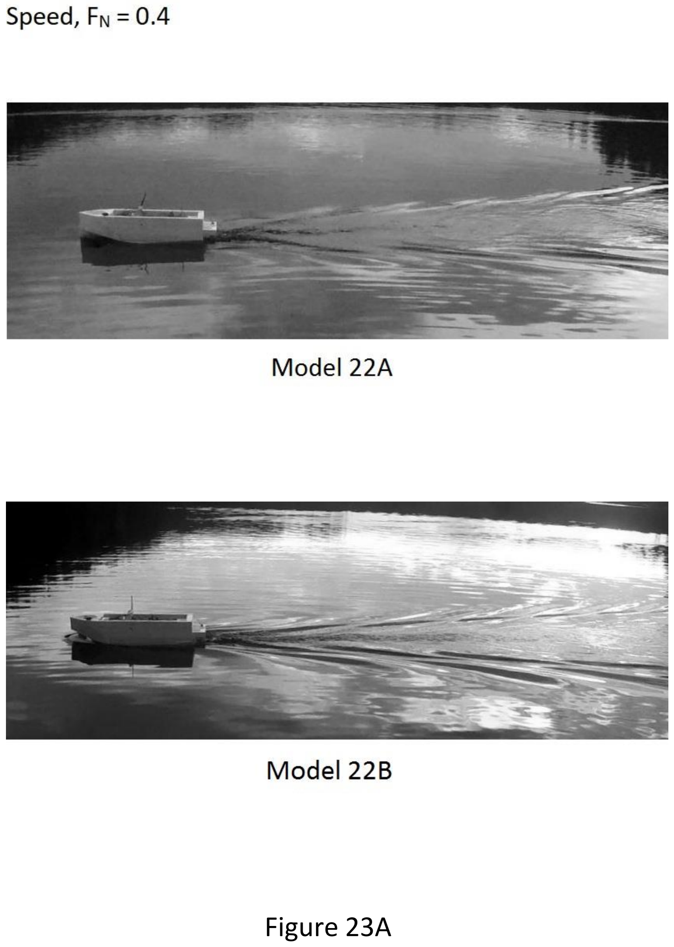

**Figure 23A** are two pictures from model tests showing the formation of stern waves for the prior art Model 22A and the inventive Model 22B at speed corresponding to Froude number ($F_N$) 0.40.

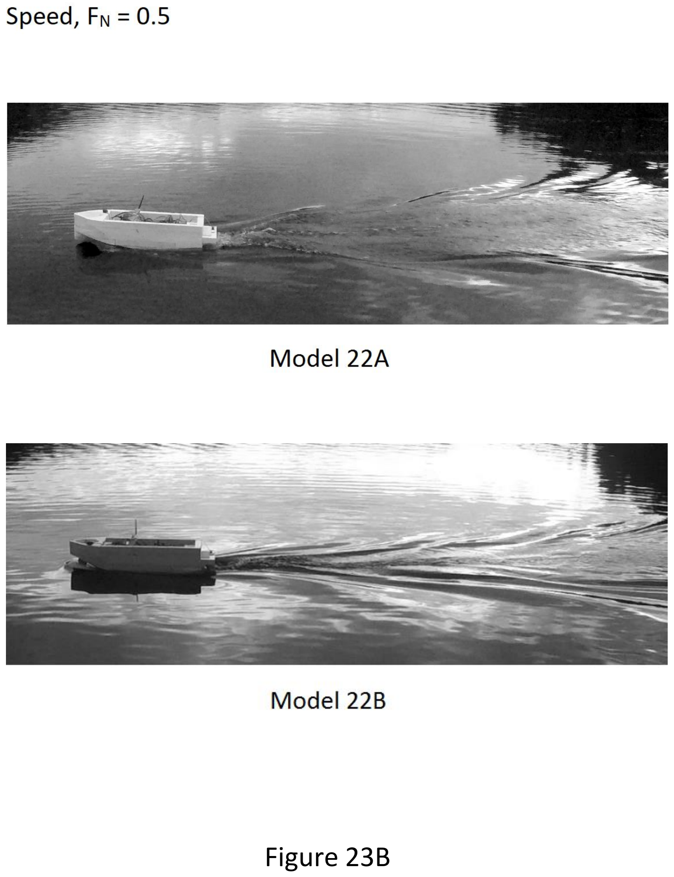

**Figure 23B** are two pictures from model tests showing the formation of stern waves for the prior art Model 22A and the inventive Modell 22B at speed corresponding to Froude number ($F_N$) 0.50.

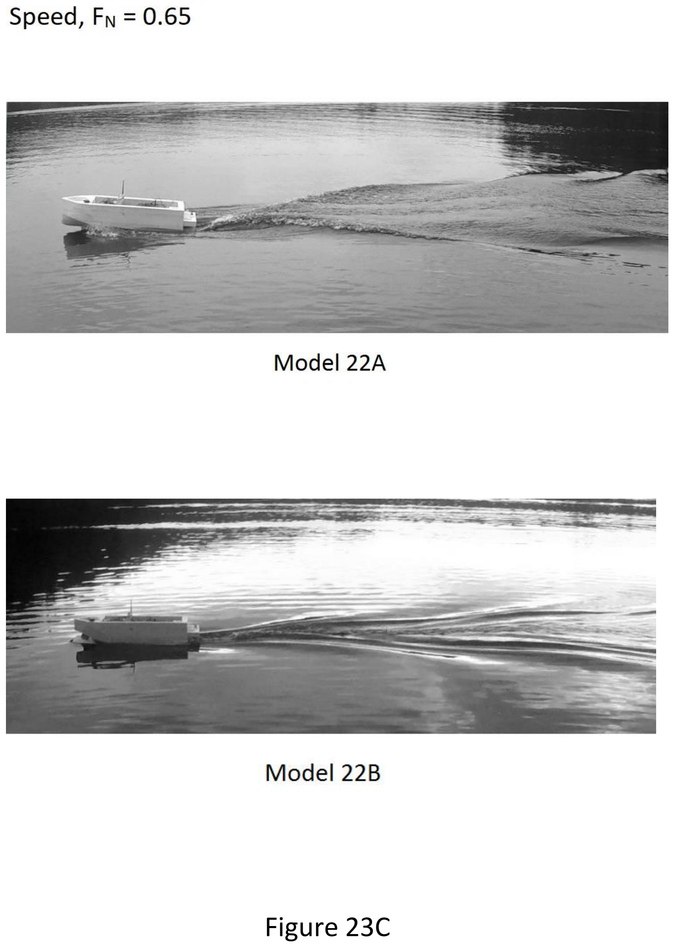

**Figure 23C** are two pictures from model tests showing the formation of stern waves for the prior art Model 22A and the inventive Model 22B at speed corresponding to Froude number ($F_N$) 0.65.

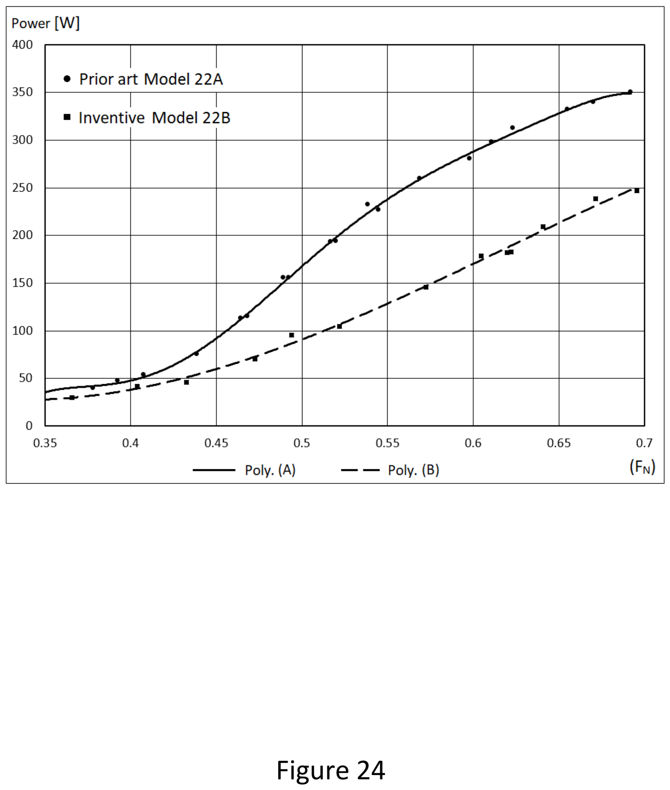

**Figure 24** shows the power consumption in watt [$W$] of the electrical propulsion engine as function of Froude number ($F_N$) from model tests of the prior art Model 22A and the inventive Model 22B.

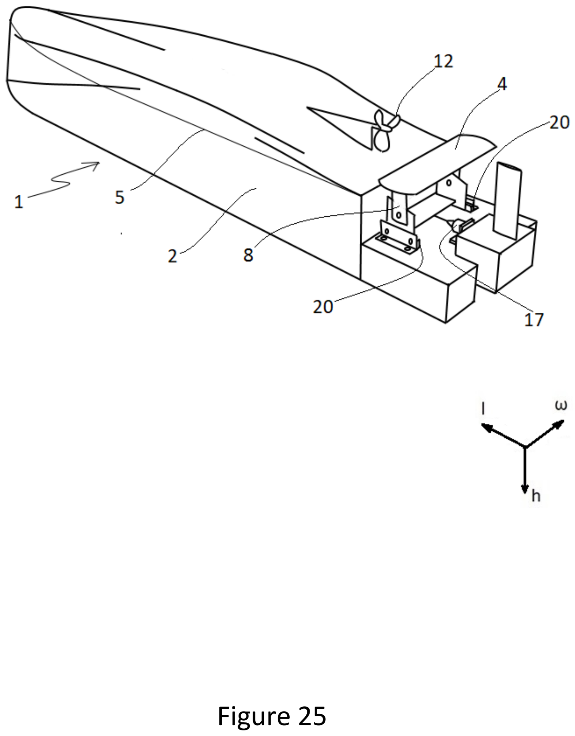

**Figure 25** is an upside down perspective illustration of a model vessel having a test set up to measure the horizontal forces in the longitudinal direction of the vessel from the aft body acting on the vessel.

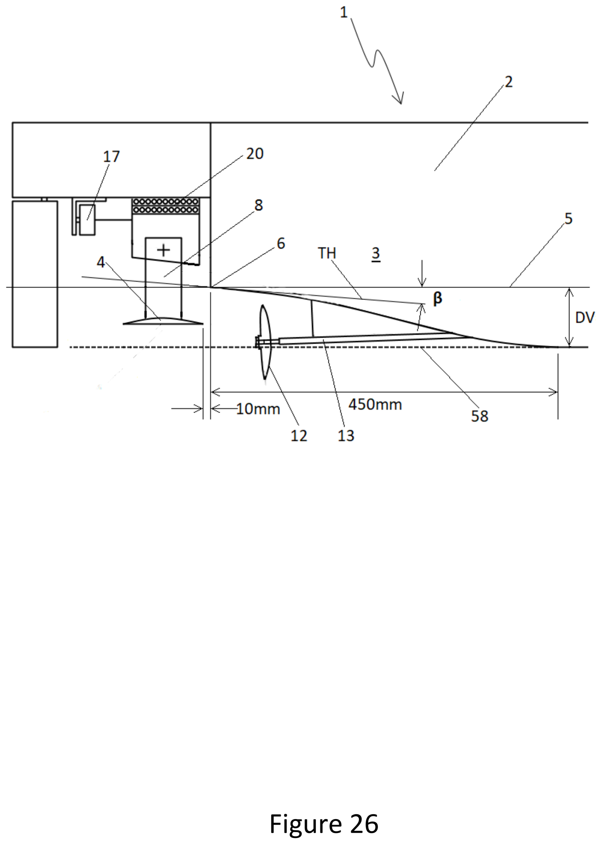

**Figure 26** is a side view illustration of the aft hull section of the model vessel shown in Figure 25 with a test set up to measure the horizontal forces in the longitudinal direction of the vessel from the aft body acting on the vessel.

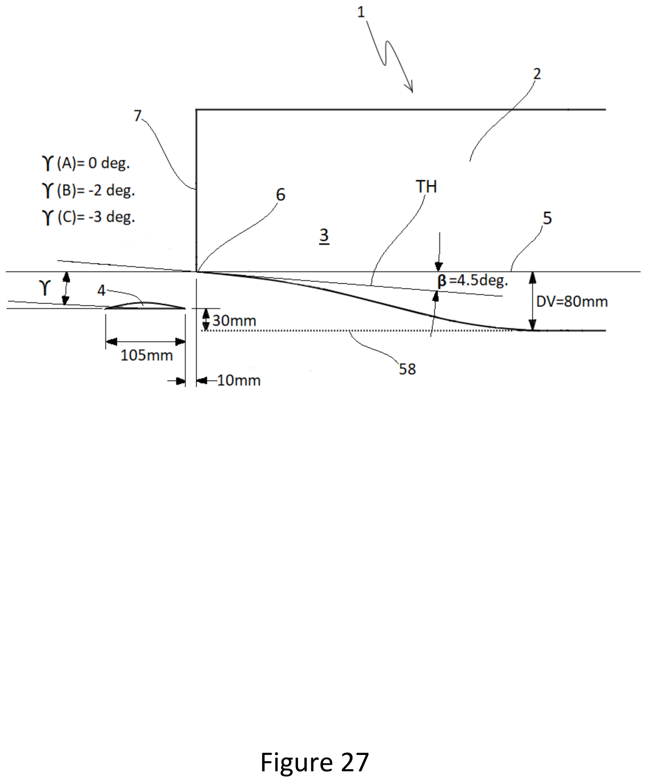

**Figure 27** is a side view illustration of the aft hull section of the model vessel shown in Figure 26 where the chord angel $\gamma$ is: 0 degrees (i.e. the cord line of the aft body and the water surface is parallel) marked (A), -2 degrees marked (B) and -3 degrees marked (C). (The support to fix the aft body to the hull, incl. the ball bearing, load cell, propeller and rudder is the same as in Figure 26 but is for convenience not shown in this figure).

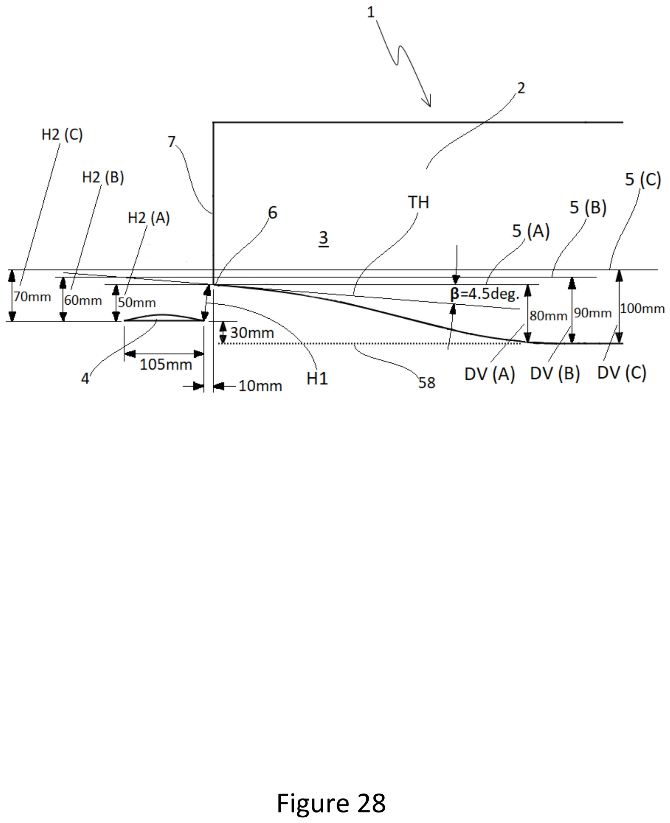

**Figure 28** is a side view illustration of the aft hull section of the model vessel shown in Figure 26 where the chord angel $\gamma$ is 0 degrees and the draft of the hull is shown at 80 mm $DV(A)$, at 90 mm $DV(B)$ and at 100 mm $DV(C)$. (The support to fix the aft body to the hull, incl. the ball bearing, load cell, propeller and rudder is the same as in Figure 26 but is for convenience not shown in this figure).

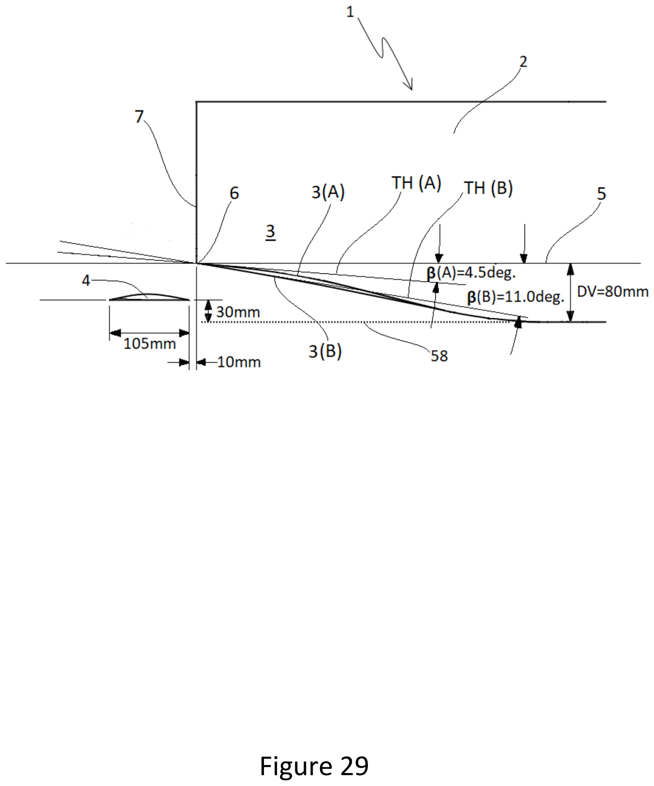

**Figure 29** is a side view illustration of the aft hull section of the model vessel shown in Figure 26 where the chord angel $\gamma$ is 0 degrees, and where the geometry of the aft hull section is altered to obtain an angle $\beta$ between a tangent line $TH$ of the aft hull section and the horizontal of 4.5 degrees marked $\beta$(A) and 11 degrees marked $\beta$(B). (The support to fix the aft body to the hull, incl. the ball bearing, load cell, propeller and rudder is the same as in Figure 26 but for convenience is not shown in this figure).

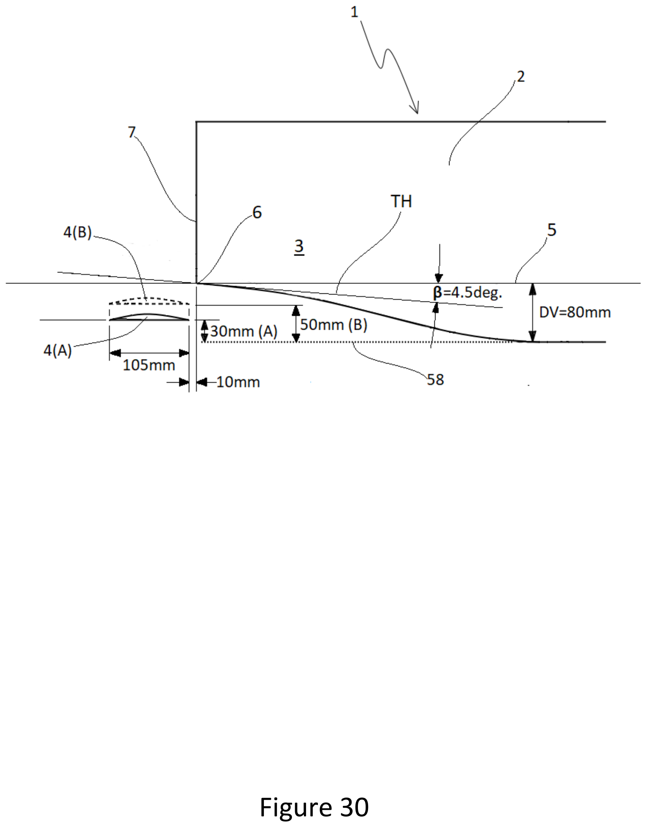

**Figure 30** is a side view illustration of the aft hull section of the model vessel shown in Figure 26 where the chord angel $\gamma$ is 0 degrees, and where the aft body is arranged 30 mm above the base line marked (A) and 50 mm above the base line marked (B). (The support to fix the aft body to the hull, incl. the ball bearing, load cell, propeller and rudder is the same as in Figure 26 but for is convenience not shown in this figure).

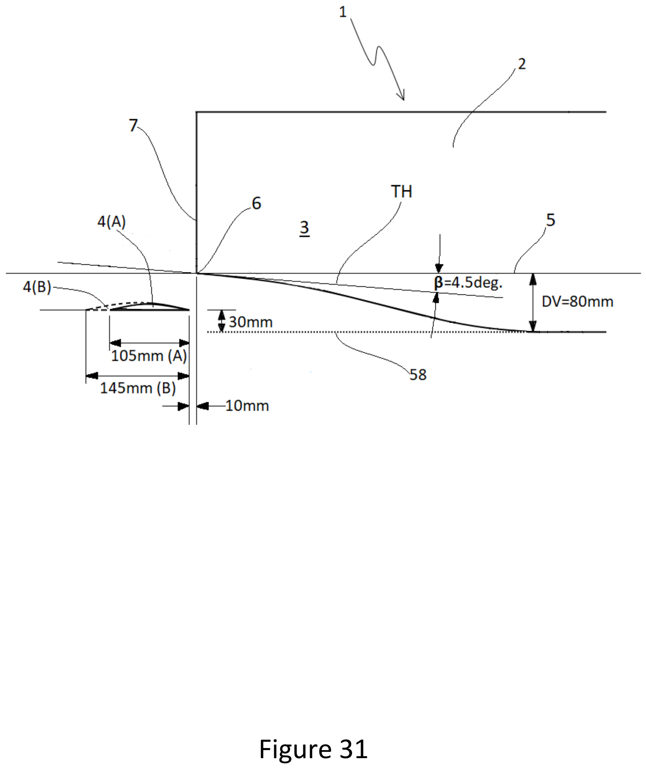

**Figure 31** is a side view illustration of the aft hull section of the model vessel shown in Figure 26 where the chord angel $\gamma$ is 0 degrees, and where the cord length of the aft body is 105 mm marked (A) and 145 mm marked (B). (The support to fix the aft body to the hull, incl. the ball bearing, load cell, propeller and rudder is the same as in Figure 26 but is for convenience not shown in this figure).

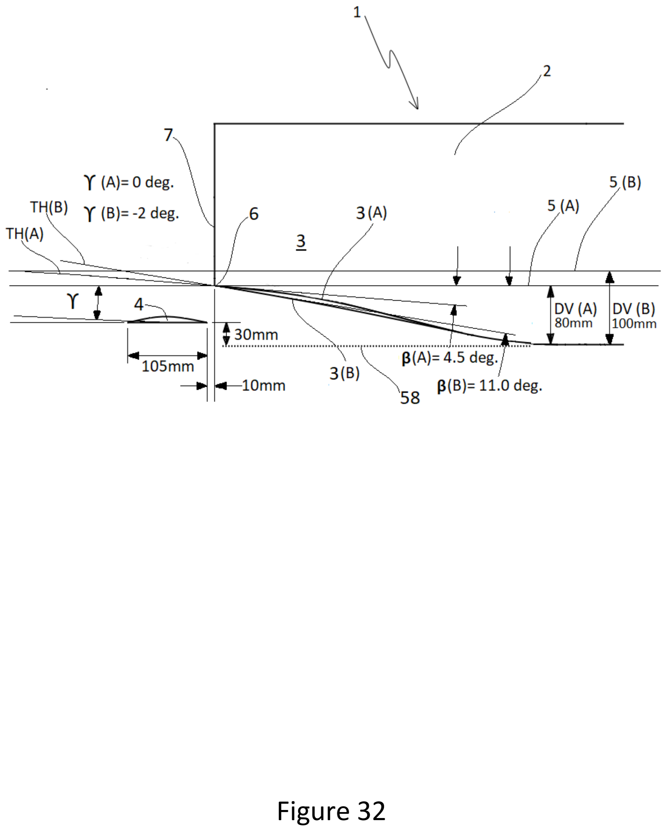

**Figure 32** shows a side view illustration of the aft hull section of the model vessel shown in Figure 26:

- where a model vessel according to the invention (A) has a draft $DV$(A) of 80 mm (which entails $A_{le}=1{,}0*A_{te}$) and an angle $\beta$(A) for the tangent line $TH$ of 4.5 degrees and a chord angel $\gamma$(A) of 0 degree, and

- a model vessel according to prior art (B) has a draft $DV$(B) of 100 mm (which entails $A_{le} = 0.71*A_{te}$) and an angle $\beta$(B) for the tangent line $TH$ of 11.0 degrees and a chord angel $\gamma$(B) of -2 degrees.

(The support to fix the aft body to the hull, incl. the ball bearing, load cell, propeller and rudder is the same as in Figure 26 but is for convenience not shown in this figure).

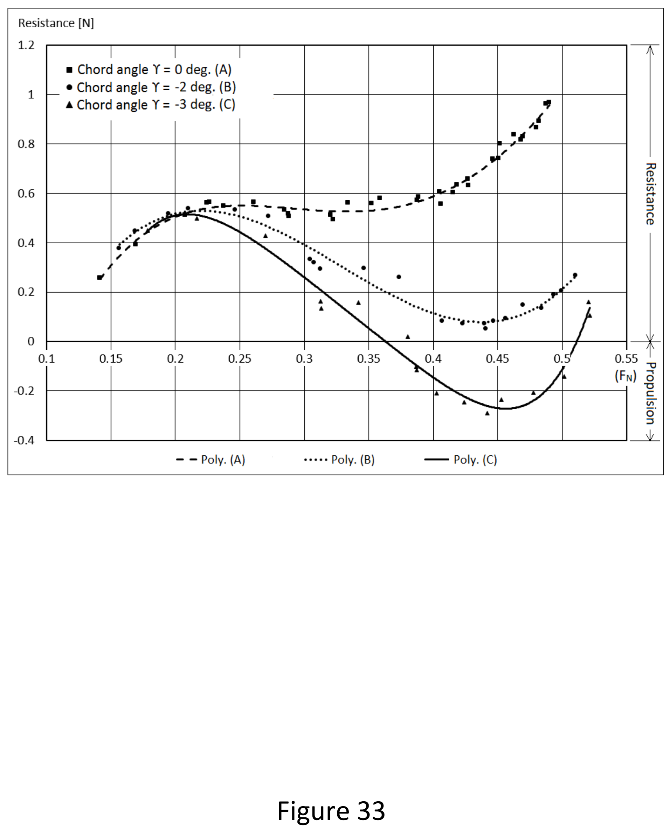

**Figure 33** shows a graphic presentation of the horizontal forces in Newton acting in the longitudinal direction of the vessel from an aft body onto the aft hull section as function of Froude number ($F_N$). The graphs are derived from model tests performed on a model with an aft hull section as shown in Figure 27 having a chord angle $\gamma$ of 0 degrees marked (A), a chord angle $\gamma$ of -2 degrees marked (B) and a chord angle $\gamma$ of -3 degrees marked (C). A positive force reading equals a backward directed force (i.e. resistance to forward motion) while a negative force reading equals a forward directed force (i.e. propulsion).

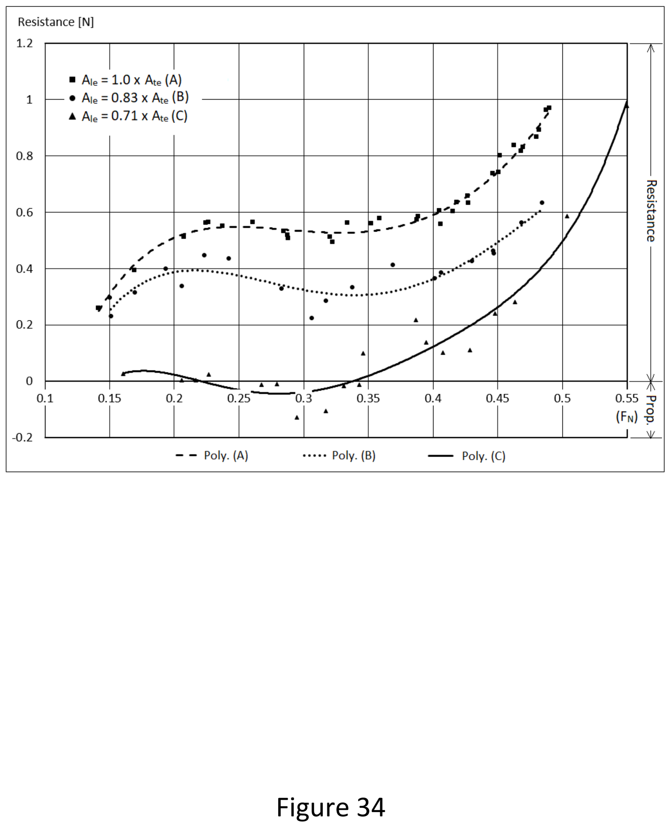

**Figure 34** shows a graphic presentation of the horizontal forces in Newton acting in the longitudinal direction of the vessel from an aft body onto the aft hull section as function of Froude number ($F_N$). The graphs are derived from model tests performed on a model with an aft hull section as shown in Figure 28 having a leading edge area ($A_{le}$) = 1.0 * trailing edge area ($A_{te}$) marked (A), ($A_{le}$) = 0.83 * ($A_{te}$) marked (B), and ($A_{le}$) = 0.71 * ($A_{te}$) marked (C). A positive force reading equals a backward directed force (i.e. resistance to forward motion) while a negative force reading equals a forward directed force (i.e. propulsion).

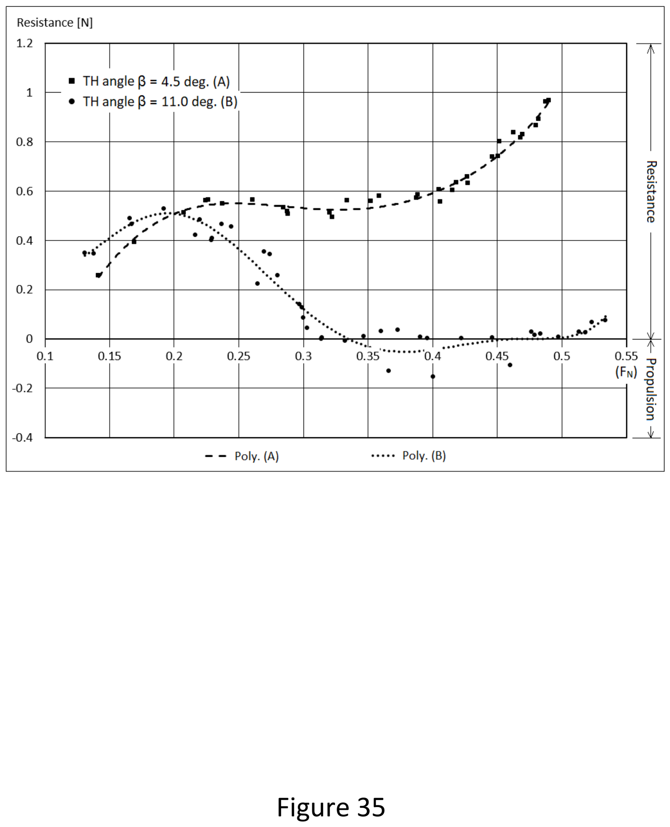

**Figure 35** shows a graphic presentation of the horizontal forces in Newton acting in the longitudinal direction of the vessel from an aft body onto the aft hull section as function of Froude number ($F_N$). The graphs are derived from model tests performed on a model with an aft hull section as shown in Figure 29 when the geometry of the aft hull section is altered to obtain an angle $\beta$ between a tangent line *TH* of the aft hull section and the horizontal of 4.5 degrees marked (A), and 11.0 degrees marked (B). A positive force reading equals a backward directed force (i.e. resistance to forward motion) while a negative force reading equals a forward directed force (i.e. propulsion).

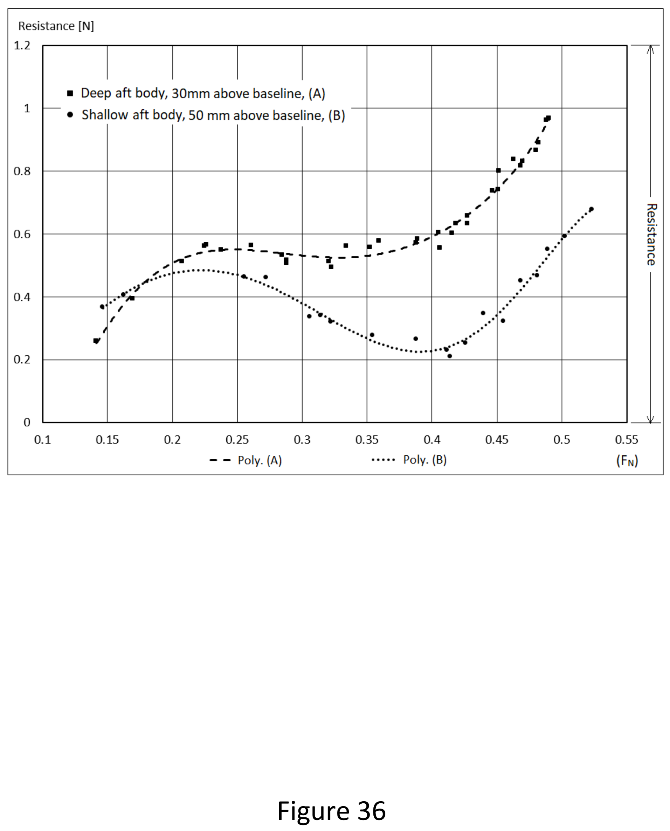

**Figure 36** shows a graphic presentation of the horizontal forces in Newton acting in the longitudinal direction of the vessel from an aft body onto the aft hull section as function of Froude number ($F_N$). The graphs are derived from model tests performed on a model with an aft hull section as shown in Figure 30 having an aft body located 30 mm above base line marked (A), and 50 mm above base line marked (B). A positive force reading equals a backward directed force (i.e. resistance to forward motion).

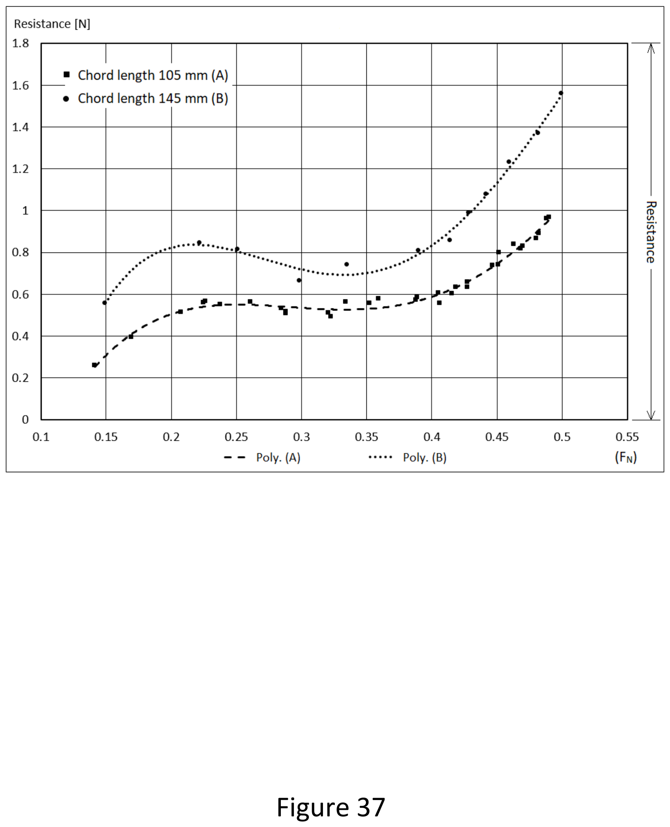

**Figure 37** shows a graphic presentation of the horizontal forces in Newton acting in the longitudinal direction of the vessel from the aft body onto the aft hull section as function of Froude number ($F_N$). The graphs are derived from model tests performed on a model with an aft hull section as shown in Figure 31 having a chord line length of the aft body of 105 mm marked (A), and 145 mm marked (B). A positive force reading equals a backward directed force (i.e. resistance to forward motion).

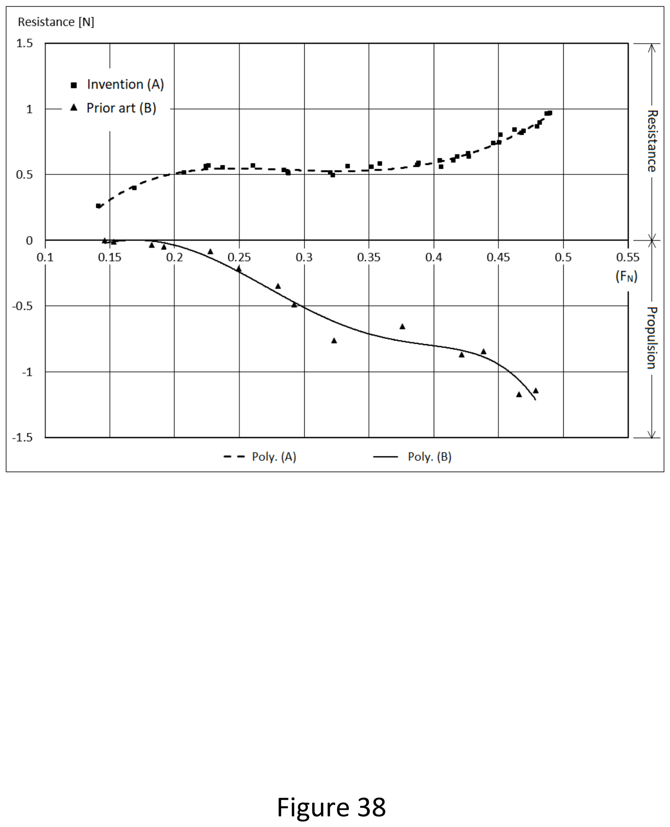

**Figure 38** shows a graphic presentation of the horizontal forces in Newton acting in the longitudinal direction of the vessel from the aft body onto the aft hull section as function of Froude number ($F_N$). The graphs are derived from model tests performed on a model with aft hull sections as shown in Figure 32 for a configuration according to the inventive model vessel marked (A) and for a configuration according to the prior art model vessel marked (B). A positive force reading equals a backward directed force (i.e. resistance to forward motion) while a negative force reading indicates a forward directed force (i.e. propulsion). As seen, the aft foil of the prior art model vessel marked (B) is providing a continuously forwardly directed propulsion force.

## DETAILED DESCRIPTION OF THE INVENTION

In the following, embodiments of the invention will be described in more detail with reference to the drawings and definitions. However, it is specifically intended that the invention is not limited to the embodiments and illustrations contained herein but includes modified forms of the embodiments including portions of the embodiments and combinations of elements from different embodiments as come within the scope of the claims.

*Definitions and reference numerals*

Throughout this application, the following definitions, numerals and letters in drawings, shall apply:

Vessel 1:
All vessels that are operated from low displacement speed to above planing speed in excess of $F_N$=1.0.
Hull 2:
The watertight body of a vessel 1 that makes the vessel 1 seaworthy, but excluding components such as superstructure, the aft body 4, the bow body 10, the propeller 12, the rudder, the keel, the deck, etc.
Hull side 2':
The hull sides of the vessel 1. I.e. not including the bow area 21 and the transom 7.
Aft hull section 3:
For a displacement vessel 1, the part of the hull 2 which is aft of the cross section of the hull 2 below a waterline 5 with the greatest cross section area, and for a planning vessel 1, the part of the hull 2 which is aft of mid ship.
Aft body 4:
The body that is arranged at a distance from the aft hull section 3.
Water surface 5:
A strait horizontal surface formed by still sea / water.
Separation line 6:
A defined line extending primarily in the transverse direction of the vessel 1 in the aft hull section 3 where a water flow 51 passing the hull 2 separates from the hull 2 when the vessel 1 is in forward motion above a minimum speed, for example at operational speed. Furthermore, the separation line 6 is defined by the aft hull section 3 having an abrupt change of direction in a longitudinal vertical plane of the hull 2.

Transom 7:
The flat or almost flat part of a hull 2 that forms the stern of a square ended vessel 1.

Support 8:
Support to fix the aft body 4 to the vessel 1.

Stern wave 9:
A wave behind or at the stern of the vessel 1 created during forward motion of the vessel 1, for example at operational speed.

Bow body 10:
The bow body that is arranged at the bow area 21 according to patent EP3247620B1.

Propeller shaft 11
Propeller 12
Propeller sleeve (with no thrust bearing) 13
Electric motor 14
Motor housing 15
Motor suspension system 16
Load cell 17
Mounting bracket 18
Base plate 19
Ball bearing slide 20

Bow area 21:
The area of the hull 2 seen from in front (over and under the water surface 5 when the vessel 1 is floating in a mass of water), but excluding the bow body 10 if any.

Bow wave 22:
A wave crest formed ahead of the bow area 21 due to the hull's 2 deceleration of the oncoming water flow 51.

Leading edge 41:
The foremost edge of the aft body 4, equivalent to "the leading edge" of an airplane wing.

Trailing edge 42:
The rearmost edge of the aft body 4, equivalent to "the trailing edge" of an airplane wing.

Chord line 43:
A straight line in a longitudinal direction of the vessel 1 extending from the leading edge 41 to the trailing edge 42.

Top surface 45:
The top surface area of the aft body 4 extending from the leading edge 41 to the trailing edge 42.

Underside 46:
The underside area of the aft body 4 extending from the leading edge 41 to the trailing edge 42.

Two vertical planes 49:
Two vertical planes in the longitudinal direction of the vessel 1, each intersecting the point defining the maximum width (W) of the aft body 4 in the transverse direction of the vessel 1.

Passage 50:

The area between the aft hull section 3 and the top surface 45 where water can flow through during forward motion of the vessel 1.

Water flow 51:
A flow of water relative to the vessel 1 due to vessel's 1 forward motion, for example at operational speed. Such water flow 51 is also shown as arrows in the figures.

Water flow surface level 53:
The top surface of a water flow 51 bordering air around a vessel 1 that can be lower or elevated relative to the water surface 5.

Bow passage 56:
The area between the bow area 21 and the top surface of the bow body 10.

Base line 58:
A horizontal line drawn in the longitudinal direction of the vessel 1 through the draft *(DV)* of the vessel 1.

*LWWL:*
The lightweight waterline is the waterline of the vessel 1 complete in all respect when it is floating motionless in a body of water but without consumables, stores, cargo, crew and effects, and without any liquids on board except that machinery and piping fluids, such as lubricants and hydraulics, are at operating levels. The vessel 1 thereby also have a fixed trim.

*DV:* The draft of the vessel 1 equalling the vertical distance between the water surface 5 and the deepest part of the hull 2 when the vessel 1 is floating motionless in the body of water.

*TH:* Tangent line of the aft hull section 3 in a longitudinal direction of the vessel 1 immediately upstream / in front of the separation line 6.

*TF:* Line in the same longitudinal vertical plane of the vessel 1 as *TH* above, intersecting the leading edge 41 and parallel to line *TH* above.

$\beta$: The angle in a longitudinal vertical plane of the vessel 1 between *TH* and the water surface 5 when the vessel 1 is floating motionless in a body of water.

$\Gamma$: The angel between the chord line 43 and the water surface 5 in a longitudinal vertical plane of the vessel 1 when the vessel 1 is floating motionless in a body of water. A positive chord angel means that the chord line 43 is pointing upwards in the vessel's 1 direction of travel, 0 degree angel means the chord line 43 is parallel to the water surface 5 and a negative angel means that the chord line 43 is pointing downwards in the vessels 1 direction of travel.

*H1*: Is the smaller of:

   i) a first minimum distance, measured in a longitudinal vertical plane of the vessel 1, between the leading edge 41 and the aft hull section 3 at or upstream / in front of the separation line 6 and

   ii) a second minimum distance, measured in the same longitudinal vertical plane as i) above, between the two parallel lines *TH* and *TF.*

*H1(w)*: The minimum distance H1 of i) or ii) at point w along the width of the leading edge 41.

*H2:* The vertical distance between the trailing edge 42 and the water surface 5 measured when the vessel 1 is floating motionless in a body of water at the lightweight waterline *(LWWL).*

$A_{le}$: The leading edge area is derived from integrating *H1(w)* above from *WL* at one side of the leading edge 41 to *WH* at the opposite side of the leading edge 41. The leading edge area is equal to or substantially equal to the cross sectional area of a water flow 51 above the leading edge 41 at operational speed of the vessel 1.

$A_{te}$: The trailing edge area is the area as seen from astern constrained by the trailing edge 42, the two vertical planes 49 and the water surface 5 when the vessel 1 is floating motionless in a body of water at the lightweight waterline *(LWWL).*

Displacement speed:
The speed range of a displacement vessel 1, usually limited by a "hull speed" of about $F_N = 0.4$.
Transition speed:
The speed range of a planing hull 2 when it is in transition from displacement speed, usually at around $F_N = 0.4$, until it reaches fully planing speed, usually at around $F_N = 0.9$.
Planing speed:
The speed where dynamic lift contributes to a major part of the buoyancy for a planing hull 2, usually above $F_N = 0.9$. Since the invention, especially when operated in combination with a bow body 10 as described in patent publication EP3247620B1, does not rely on lifting the hull 2 out of the water even at speeds above $F_N = 0.4$, the reference to transition or planing speed for a hull 2 according to the invention only refers to the speed itself. Hence, it does not refer to planing of the hull 2.
Operational speed:
The speed interval the vessel 1 is operating at during transit when there are no speed restrictions.

*General design criteria*

The working principle and the main objective for the invention is the same for both slow or fast vessels 1. However, certain design issues should be taken in consideration when optimizing the inventive vessel 1.

*Leading edge area / trailing edge area*

The common principle for all embodiments of the invention is to allow a sufficient water flow 51 to flow over the top surface 45 of the aft body 4 through the passage 50 during forward propulsion of the vessel 1. The cross sectional area of a water flow 51 passing the leading edge 41 of the aft body 4 should be equal to, or almost equal to, the area from the trailing edge 42 of the aft body 4 and up to the water surface 5 in order to achieve equilibrium in the water mass downstream the vessel 1 and thereby prevent the formation of a stern wave 9 when the vessel 1 is in forward motion. By equilibrium is meant that the water flow surface level 53 above the trailing edge 42 is at the same level as the (surrounding) water surface 5 during forward motion of the vessel 1, for example at operational speed. In Figure 8A-C this is achieved by having *H1 = H2.* In Figure 10 this is achieved by having $A_{le} = A_{te}$.
In general, the width of the aft body 4 in the transverse direction of the vessel 1 will be equal to, or almost equal to, the width of the transom 7 of the vessel 1.

*Adaption to different speed ranges*

Advantageous embodiment for adapting the vessel for different speed ranges are shown and explained by aid of Figure 7A-C.
When operating a vessel 1 according to the invention having a displacement hull at a low speed ($F_N < 0.3$), the aft body 4 may be positioned closer to the water surface 5. When the aft body 4 is placed closer to the water surface 5, the length of the chord line 43 can be reduced compared to a deeper positioning of the aft body 4. When operating the vessel at higher speed ($F_N \geq 0.3$), there might be advantageous to position the aft body 4 deeper and to increase the length of the chord line 43.
Figure 7A show one embodiment of the inventive vessel 1 having a typical displacement hull 2. The particular arrangement and design of the aft body 4 is optimized for operation at a speed below an $F_N$ of about 0.3. The aft body 4 can in this particular case have a relatively short chord line 43 and be placed at a depth within the upper half of the draft *DV* of the hull 2, for example at 30% of the draft *DV.*
As the speed increases, the upward momentum in a water flow 51 passing under the aft hull section 3 upstream the aft body 4 increases. The impact from the aft body 4 onto a water flow 51 should then be enhanced.

This is achieved by increasing the length of the chord line 43 and to locate the aft body 4 closer to the base line 58, as the top surface 45 of the aft body 4 will redirect the water flow 51 more effectively then the underside 46 of the aft body 4. The increased cord line 43 and deeper located aft body 4 will then effectively counteract the increasing upward momentum of the water flow 51, thereby achieving an essential horizontal direction of a water flow 51 downstream the aft body 4.

Figure 7B shows the same hull 2 as shown in Figure 7A but with an aft body 4 designed for a higher speed range; typically, within the speed range $F_N$=0.4-0.6. In order to minimize the propulsion resistance, the aft body 4 is in this particular case located at a depth corresponding to about 50-60% of the draft *DV* of the hull 2 and the length of the cord line 43 is extended relative to the length shown in Figure 7A.

Figure 7C shows the same hull 2 as in Figure 7A but with an aft body 4 designed for operational speed above $F_N$=0.7. Here the length of the chord line 43 is extended further relative to the length shown in Figure 7B, and the underside 46 of the aft body 4 is located at the base line 58 of the hull 2.

As a rule of thumb, the cord line 43 should be greater than the draft of the aft body 4, typical by a factor of around 2.0 or greater.

At low speed an aft body 4 with a long chord line 43, and placed relatively deep, only contributes to a minor increase in resistance compared to a smaller and higher placed aft body 4. If the vessel 1 is supposed to be operated over a wide speed range, it might be advantageous to choose an aft body 4 with long chord line 43 placed at a greater depth optimized for the highest operational speed of the vessel 1.

The optimal depth and optimal length of the chord line 43 for minimizing the total resistance $R_t$ for the vessel 1 may for example be determined by model tests and/or computational fluid dynamics (CFD) analyses.

*Location of the separation line*

The invention includes a separation line 6 at the aft hull section 3 controlling the separation of a water flow 51 from the aft hull section 3 at a defined line in the transverse direction (w) of the vessel 1 during forward motion of the vessel 1. The separation line 6 is preferably located close to the water surface 5 when the vessel 1 without payload is laying still and floating in a mass of water.

The separation line 6 can either be placed upstream / in front of, vertically above, or downstream / aft of the leading edge 41 as shown in Figure 8A-C. For practical reason the separation line 6 will normally be within the length of one chord line 43 of the leading edge 41, and preferably within the length of half a chord line 43.

Figure 8B-C shows the geometry of the aft hull section 3 in relation to the top surface 45 of the aft body 4 where the leading edge 41 is located upstream / in front of the separation line 6. In such design, it is preferable that the minimum distance, in a vertical longitudinal plane of the vessel 1, between the top surface 45 and the aft hull section 3 upstream / in front of the separation line 6 is held constant to avoid a change in the velocity of a water flow 51 in the passage 50 as such a change in velocity will result in increased resistance for the vessel 1, especially if the velocity of the water flow 51 is reduced in the passage 50. It should also be noted that the wetted surface, and accordingly the frictional resistance $R_f$, will increase in the design shown in Figure 8 B-C.

*Turbulence - design of the aft body and its supports*

When designing the aft body 4, including the supports 8 to fix the aft body 4 to the hull 2, it is advantageous to avoid creation of turbulence and vortexes.

If the outer ends of the aft body 4 in the transverse direction of the vessel 1 extends freely in the water during operation, it might be advantageous to reduce the thickness of the aft body 4 in a vertical plane towards the outer ends and/or to make the aft body 4 elliptical when seen from below (as shown in Figure 14B drawing (c)) and thereby limit creation of tip vortexes.

Also winglets, as used in aviation, can be used to reduce the tip vortexes. It would then be natural to also make use of the winglets as supports 8 for the aft body 4.

The aft body 4 should preferably also be shaped according to shape of the aft hull section 3 upstream / in front of the separation line 6 and the resulting angle of attack of the water flow 51 (i.e. the angel between the water flow 51 upstream leading edge 41 and the chord line 43). Higher angel of attack requires increased length of the chord line 43. Furthermore, in order to obtain laminar water flow 51 without turbulence, and to prevent cavitation on the top surface 45, especially at higher velocity of the water flow 51, a thicker aft body 4 profile and/or more curved top surface 45, especially toward the leading edge 41, would be beneficiary. Alternatively, a high angle of attack for the front part of the aft body 4 can be avoided by keeping the angle β of the tangent line TH low.

When attaching the aft body 4 to the hull 2 some care should be taken when designing the support 8. Besides ensuring sufficient structural integrity, the support 8 should preferably be made with a streamlined design. In addition, the support 8 should be oriented according to the direction of a water flow 51 where the supports 8 are located to avoid unnecessary propulsion resistance. It should be noted that under the aft hull section 3 of a displacement hull 2, a water flow 51 can become partly inwardly directed towards the longitudinal center line of the vessel 1.

If the aft body 4 is placed between the hull sides 2',2", as shown in Figure 9C, Figure 9D, Figure 15A drawing (b) and Figure 15B drawing (c), it might be advantageous to round the lowest part of the inward facing hull sides 2',2" in order to make a streamlined inlet at the sides for a water flow 51 to enter the passage 50.

Figure 9A shows the aft body 4 fixed to the hull 2 by two vertical support plates 8. The number of support plates 8 are decided according to the demand for structural integrity. Each support plate 8 is preferably orientated according to the local direction of water flow 51.

Alternatively, the aft body 4 may be fixed to the transom 7 of the hull 2. In Figure 9B such a configuration is exemplified by two triangular support 8 plates, where the curved horizontal edge is fixed to the top surface 45 of the aft body 4, and the vertical edge is fixed to the transom 7.

In order to prevent a rise of the water flow surface level 53 at the outer side of the hull sides 2',2" at the aft hull section 3 that might accrue during forward motion, and further to prevent this rise of the water flow surface level 53 to be deflected outward as stern wave 9 from the hull sides 2',2'', it might be advantageous to taper the hull sides 2',2" of the aft hull section 3 inward towards the longitudinal center line of the vessel 1. An example of such a tapering of the hull sides 2', 2" is shown in Figure 9D.

*Adaption to variation in draft*

Some vessels 1 experience a significant variation in draft *DV* when being operated due to different load conditions. To optimise the vessel 1 for such draft variations it would be advantageous to be able to adjust the amount of water passing over the aft body 4 (i.e. altering *H1*) according to the vessel's 1 draft *DV,* as well as the height *H2* from the trailing edge 42 of the aft body 4 to the water surface 5.

By making the aft body 4 adjustable in a horizontal longitudinal direction of the vessel 1, an optimal water flow 51 can be led over the aft body 4 at different drafts *DV* of the hull 2. At shallow draft *DV* of the hull 2, the leading edge 41 can be arranged close to the hull 2, for example vertically below the separation line 6. As the vessel 1 is operated at a deeper draft *DV* of the hull 2, the leading edge area $A_{le}$ can be increased by moving the aft body 4 horizontally further downstream the separation line 6.

Alternatively, or in addition, the front part of the aft body 4, or the entire aft body 4, can be made tiltable with a rotational axis parallel to the transverse direction of the vessel 1 and parallel to the water surface 5. When the leading edge 41 is tilted down, a larger water flow 51 is allowed to pass over the top surface 45. If the entire aft body 4 is tilted around said rotational axis close to aft body's 4 centre line, the trailing edge 42 will approach the water surface 5 while the leading edge 41 will become deeper as the chord line 43 of the aft body 4 is tilted downward (i.e. a smaller or more negative chord angel y). This will contribute to a larger leading edge area $A_{le}$ and a reduced trailing edge area $A_{te}$. However, to tilt the aft body 4 downward has the disadvantage of creating a non-desired upward direction of a water flow 51 downstream the trailing edge 42.

If the aft body 4 is fixed and the hull 2 is to be operated at different drafts *DV,* a compromise has to be found. An advantageous compromise could be to adapt the leading edge area $A_{le}$ in view of the trailing edge area $A_{te}$ for a draft *DV* corresponding to the deepest draft *DV* of the hull 2, or at least deeper than minimum operational draft *DV* of the hull 2.

Although the aft body 4 counteracts a stern down trim, the vessel 1 might experience some increased stern down trim as the speed rises, thereby increasing the distance from the trailing edge 42 to the water surface 5 at high speed. With this in mind, it might be advantageous to allow the leading edge area $A_{le}$ to be greater than the the trailing edge area $A_{te}$ when the vessel 1 is floating motionless in a body of water. Alternatively, the leading edge area $A_{le}$ can be increased as mentioned above as the speed of the vessel 1 increases. Also the geometry of the aft hull section 3 can be made with a flap or similar to make the leading edge area $A_{le}$ adjustable.

*Location of propeller*

The vessel's 1 propeller 12 can be located upstream / in front of the aft body 4 as shown in one embodiment in Figure 26. Furthermore, the propeller 12 can be located vertically under the aft body 4 or vertically above the aft body 4. Note that positions vertically under or above the aft body 4 include any positions along a horizontal plane.

Initial testing performed indicates that a location of the propeller 12 under the aft body 4 can be advantageous as the same thrust force [N] is generated from the propeller with a smaller power consumption [*W*] from the propulsion engine.

*A vessel having both an aft body and a bow body*

The arrangement of an aft body 4 according to the invention as described will reduce the total resistance $R_t$ for a vessel 1 above a certain speed of the vessel 1. Further, the inventive vessel 1 will counteract a stern down trim of the vessel 1 if the vessel 1 is being operated at higher speeds, for example above $F_N$=0.3. As a negative consequence, the inventive vessel 1 can experience a larger bow down trim than a prior art vessel 1 not fitted with an aft body 4. Even if the total resistance $R_t$ of the inventive vessel 1 is lower, the bow down trim of the inventive vessel 1 will result in an increased bow wave 22 and thereby an increased wave resistance $R_w$ from the bow area 21.

The invention disclosed in patent publication EP3247620B1 concerns a bow design with a bow body 10 that counteracts creation of a bow wave 22, thereby reducing the wave resistance $R_w$ from the bow area 21 and the total resistance $R_t$ for the vessel 1. However, this particular bow design suffers the disadvantage that such a vessel 1 can experiences an increased stern down trim during forward propulsion, thereby creating greater wave resistance $R_w$ from the stern. In other words, by reducing the formation of waves at one end of the vessel 1, the formation of waves at the other end of the vessel 1 is often increased.

By combining these two inventions (i.e. an aft body 4 and a bow body 10) on the same vessel 1 as shown in Figure 11, model tests have shown that a significant synergy effect is achieved. I.e. the reduction in total resistance $R_t$ becomes greater than adding the individual contribution from each invention one at the time on the same vessel 1.

Numerous model tests measuring the total resistance $R_t$ has been performed and an overview picture of these tests are shown in Figure 12. The solid line marked Rt(A) is the total resistance $R_t$ for a prior art displacement vessel 1. The stippled line $Rt$(B) is the total resistance $R_t$ for an inventive displacement vessel 1 having an aft body 4 and the dotted line marked Rt(C) is the total resistance $R_t$ for an inventive displacement vessel 1 having both an aft body 4 and a bow body 10. As can be seen from the graph the displacement vessel 1 having both an aft body 4 and a bow body 10 has superior performance above $F_N$ of about 0.26, while the vessel 1 has somewhat higher total resistance $R_t$ under that speed.

A prior art planing hull 2, as shown in Figure 3, relies upon reaching planing speed to obtain reasonable good resistance/speed ratio. The speed needed to obtain sufficient dynamic lift depends to a large degree on the weight of the vessel 1. This highly limits the load capacity of a prior planing vessel 1. In contrast, an inventive vessel 1 as disclosed in Figure 11 does not rely on lifting the hull 2 out of the water to achieve a reasonable good resistance/speed ratio. Since there is no need to lift the inventive vessel 1 out of the water, the resistance of the vessel 1 is far less depended on the weight of the vessel 1. The inventive vessel 1 described herein combined with a bow body 10 thus makes it possible to operate a vessel 1 even at heavy load conditions throughout a wide speed range with far better fuel economy than a prior art vessel 1.

Also for planning vessels 1 numerous model tests has been performed. Figure 13 gives an overview based on these model tests, where the solid line marked Rt(A) is the total resistance $R_t$ for a prior art planing vessel 1. The stippled line $Rt$(B) is the total resistance $R_t$ for an inventive planing vessel 1 having an aft body 4 and the dotted line marked Rt(C) is the total resistance $R_t$ for an inventive planing vessel 1 having both an aft body 4 and a bow body 10. From this can be seen that the inventive vessel 1 having both an aft body 4 and a bow body 10 has better performance than a prior art planning vessel 1 above $F_N$ of about 0.25.

*Detailed description of a first embodiment*

Figure 14A and Figure 14B shows an aft hull section 3 of a vessel 1 according to a first embodiment.

Figure 14A drawing (a) shows a vertical longitudinal plane of the aft hull section 3 when the vessel 1 is floating motionless in a body of water. The vessel 1 comprising a hull 2, hull sides 2',2" and a transom 7. The separation line 6 is located slightly above the water surface 5. The vessel 1 comprises an aft body 4 having an underside 46 oriented parallel with the water surface 5 and located at approximately 50 % of the draft $DV$ of the hull 2. The aft hull section 3 has decreasing cross sectional area towards the stern of the vessel 1. The angel between the tangent line $TH$ of the aft hull section 3 immediately upstream / in front of the separation line 6 and the water surface 5 is marked $\beta$. The aft body 4 is located at a distance to the hull 2 making a passage 50 between the aft hull section 3 and the top surface 45 of the aft body 4. The minimum distance between the top surface 45 and the aft hull section 3 is kept constant upstream / in front of the separation line 6 in order to achieve a constant velocity of a water flow 51 in the passage 50 when the vessel 1 is at operational speed. The minimum distance $H1$ between the leading edge 41 and the aft hull section 3 is equal to the distance $H2$ being the distance from the trailing edge 42 to the water surface 5.

Figure 14A drawing (b) is the aft hull section 3 shown in Figure 14A drawing (a) seen from behind. Figure 14A drawing (b) is showing the hull 2 having draft $DV$ and a transom 7. The separation line 6 is located slightly above the water surface 5. The aft body 4 is attached to the vessel 1 by two supports 8. The supports 8 are placed with equal offsets to the longitudinal centre axis of the vessel 1. The outer ends of the aft body 4 in transverse direction of the vessel 1 have downward tapered top surface 45 to reduce turbulence. The two imaginary vertical planes 49 in the longitudinal direction of the vessel 1 intersecting the two points defining the maximum width (W) of the aft body 4 are marked with stippled lines.

Figure 14B drawing (c) shows the aft hull section 3 of Figure 14A seen from below. The hull 2, hull sides 2',2" and the underside 46 of the aft body 4 is shown with solid lines. The two streamlined supports 8 fixing the aft body 4 to the hull 2 are shown with stippled lines. The supports 8 are orientated in the direction of travel of the vessel 1. The separation line 6 is shown in the transverse direction of the vessel 1 with a stippled line. Also the two imaginary vertical planes 49 are shown with stippled lines. The outer ends in the transverse direction of the aft body 4 have rounded shape when seen from below to reduce turbulence. The leading edge 41 and the trailing edge 42 is extending all the way out to the two points defining the maximum width ($W$) of the aft body 4 (i.e. all the way out to the hull sides 2' and 2").

Figure 14B drawing (d) is the same vertical longitudinal plane of the aft hull section 3 of the inventive vessel 1 as shown in Figure 14A drawing (a) and having the same draft $DV.$ But here the working principle and the water flow 51 indicated by arrows at the aft hull section 3 and around the aft body 4 at operational speed is illustrated. The water flow 51 direction upstream the leading edge 41 has a partly upward direction due to the tapered design of the aft hull section 3. This partly upwardly directed water flow 51 entering over the leading edge 41 of the aft body 4 is redirected by the shape of the top surface 45 from partly upward to a horizontal (or slightly downward) direction immediately downstream the trailing edge 42. The horizontally orientated underside 46 of the aft body 4 will redirect the upwardly directed water flow 51 upstream the aft body 4 that passes under the leading edge 41 to a horizontal (or almost horizontal) direction immediately downstream the trailing edge 42, thus achieving a resulting horizontal direction of the combined water flow 51 passing over and under the aft body 4 merging downstream the trailing edge 42. (As a water flow 51 passing under the trailing edge 42 may still have a slightly upwardly direction it can be advantageous that a water flow 51 passing over the trailing edge 42 has a slightly downwardly direction to ensure that the merged water flow 51 downstream the trailing edge 42 has a horizontal direction). The constant minimum distance between the aft hull section 3 and the top surface 45 upstream the separation line 6 contributes to a constant speed of the water flow 51 through the passage 50. The water flow surface level 53 is elevated slightly above the surrounding water surface 5 over a part of the top surface 45 as indicated. The height of the water flow 51 over the leading edge 41 is marked *H1* and is equal to the height of the water flow 51 over the trailing edge 42 marked *H2.* Since the water flow surface level 53 passing over the trailing edge 42 is at the same level as the surrounding water surface 5, a state of equilibrium in the water mass downstream the trailing edge 42 is obtained. The creation of a stern wave 9 is thereby greatly reduced.

*Detailed description of a second embodiment*

Figure 15A and Figure 15B shows an aft hull section 3 of a vessel 1 according to a second embodiment. This vessel 1 is similar to the vessel 1 of the first embodiment, with the following main exceptions:
As best shown in Figure 15A drawing (a) (showing a longitudinal vertical plane of an aft hull section 3), the separation line 6 is arranged upstream / in front of the leading edge 41. The separation line 6 is further located slightly below the water surface 5 when the vessel 1 is floating motionless in a body of water having a draft *DV.* The angel β between the tangent line *TH* and the water surface 5 is shown. As the separation line 6 is located upstream / in front of the leading edge 41, the distance *H1* is here defined by the minimum distance between the tangent line *TH* and a line parallel with *TH* intersecting the leading edge 41 marked *TF.*
As best shown in Figure 15A drawing (b) (being the aft hull section 3 shown in Figure 15A drawing (a) seen from behind), the hull sides 2',2" are used as supports 8 for the aft body 4.

As best shown in Figure 15B drawing (c) (showing the aft hull section 3 of Figure 15A seen from below) the transverse ends of the aft body 4 are straight and oriented along the longitudinal direction of the vessel 1 and are fixed directly to the hull 2. Each hull side 2',2" at the aft hull section 3 below the water surface 5 are tapered towards the longitudinal centre axis of the vessel 1 shown with stippled lines.
Figure 15B drawing (d) (showing the same vertical longitudinal plane of the aft hull section 3 of the vessel 1 as shown in Figure 15A drawing (a)) has the same draft *DV,* but here the working principle and a water flow 51 indicated by arrows at the aft hull section 3 and around the aft body 4 at operational speed is illustrated. The working principle for this second embodiment is the same as for the first embodiment, and the text explaining the working principle of Figure 14B drawing (d) could be duplicated except for: *"The constant minimum distance between the aft hull section 3 and the top surface 45 upstream / in front of the separation line 6 contributes to a constant speed of a water flow 51 through the passage 50."* which is not relevant for this second embodiment.

*Detailed description of a third embodiment*

In a third embodiment, the inventive vessel 1 comprises both an aft body 4 as described herein and a bow body 10 as described in patent publication EP3247620B1, the contents of which are incorporated herein by reference, in particular the Figures 10-15 and its related text in EP3247620B1.
As a specific example of the third embodiment, reference is made to Figure 11 showing a bow body 10 arranged at the bow area 21 of the vessel 1 and an aft body 4. A water flow 51 around the bow body 10 and a water flow 51 around the aft body 4 are shown with arrows.

**Model tests - total resistance of model vessels**

To document the mode of operation of the inventive vessel 1 and to verify a reduction in total resistance $R_t$, the inventor has carried out model tests on the model vessels shown in Figure 16, Figure 20 and Figure 22.
To be able to monitor thrust from a propeller 12, all model vessels 1 (except for the planning model vessels 1 shown in Figure 22) are equipped with powertrain set up as shown in Figure 17. The propeller 12 is connected to an electrical motor 14 by a propeller shaft 11. Around the propeller shaft 11 there is a propeller sleeve 13 with brass bearings to support the propeller shaft 11. The propeller sleeve 13 does not absorb any thrust from the propeller 12. The electrical motor 14 is directly attached to the motor housing 15. The motor housing 15 is attached to four mounting brackets 18 through four motor suspension systems 16 which are configured to absorb torsional moment but not thrust from the propeller. The four mounting brackets 18 are directly connected to the base plate 19. The motor suspension system 16 makes the motor housing 15 hover over the base plate 19 without restricting movement for the motor housing 15 in longitudinal direction of the propeller shaft 11. The base plate 19 and the propeller sleeve 13 are attached to the model vessel 1. In front of the motor housing 15 there is a high precision load cell 17 attached to the base plate 19 that limits the forward movement of the propeller 12, the propeller shaft 11, the electrical motor 14 and the motor housing 15. The propeller shaft 11 is mounted close to horizontal when the model vessel 1 is laying still and floating in a body of water.

During operation, the motor housing 15 applies pressure onto the load cell 17 and all thrust from the propeller 12 is transferred to the load cell 17. Consequently, the propeller thrust in Newton [N] is monitored and logged during operation of the model vessel 1. When the model vessels 1 is operated at constant speed the propeller thrust is equal to the total resistance $Rt$ for the model vessel 1.

The speed of all model vessels 1 is measured with high accuracy Doppler GPS. The speed in meters per second [m/s] is converted to Froude number ($F_N$) for each model vessel 1.

The measured results of the total resistance $R_t$ for the model vessels 1 shown in Figure 16 and Figure 20 measured in Newton [N] as function of speed ($F_N$) are logged and plotted in Figure 19 and Figure 21 respectively, using the test setup as described above.

In Figure 19, and in all other graphs, Poly. (...) means interpolation of measurement points.

For the planing model vessels 1 shown in Figure 22, the power consumption [W] of an electric brushless motor attached to a Z-drive and corresponding speed ($F_N$) is logged using the same high accuracy Doppler GPS. The result is and plotted in Figure 24.

All model vessels 1 are radio-controlled.

*Model test 1 -double propelled slender displacement hull*

Figure 16 shows an upside down perspective illustrations of a prior art model vessel 1 with a slender displacement hull marked as Model 16A. Model 16B is the same model vessel 1 as Model 16A but fitted with an aft body 4 according to the invention. The model vessel 1 is equipped with two propulsion systems for measuring thrust as described above.

The length, width and draft *DV* of both model hulls 2 are 270 cm, 42 cm and 11 cm, respectively. The full-scale vessel 1 of this model vessel 1 has the separation line 6 located at the water line 5 and so has the model vessel 1. Consequently, in order to apply an aft body 4 as described above, there is no need to do any cut-out of the aft hull section 3 in order to make $A_{le}$ equal to $A_{te}$.

With reference to the Model 16B, the length of the chord line 43 of the aft body 4 is 10 cm. The aft body 4 is attached to the aft hull section 3 such that the leading edge 41 is located 1 cm upstream / in front of the separation line 6. Further, the maximum (W) of the aft body 4 in the transvers direction (w) of the hull 2 is 42 cm, which is equal to the width of the model vessel 1. The underside 43 of the aft body 4 is placed 2.7 cm below the water surface 5 and the cord angle $\gamma$ is orientated parallel to the water surface 5 when the model vessel 1 is floating motionless in a mass of water. The maximum vertical thickness of the aft body 4 is 1.0 cm. The aft hull section 3 has a double curvature in the longitudinal vertical plane of the model vessel 1 and the angel $\beta$ between the tangent line *TH* and the water surface 5 is 0 degrees (i.e. parallel with the water surface 5).

During test runs of the prior art Model 16A maintained close to neutral trim throughout the entire speed range of the test. However, the model vessel 1 experiences some degree of increasing draft *DV* as speed increased.

Model 16B according to the invention obtained some bow down trim and increased draft for the bow area 21 as speed increased, leading to an increased bow wave 22 compared to the prior art model vessel 1 at comparable speeds.

As clearly seen from the pictures in Figure 18A and Figure 18B there is a significant reduction of the stern wave 9 for the inventive Model 16B compared to the prior art Model 16A at both speeds (i.e. $F_N$=0.30 and 0.36).

Figure 19 shows the results from the model testing, logged as total resistance $R_t$ [N] as a function of speed ($F_N$). As clearly seen, even if Model 16B generates a larger bow wave 22 than Model 16A at comparable speeds, Model 16B experiences a reduction in the total resistance $R_t$ compared to Model 16A in the full speed range from about $F_N$=0.19 and up to about $F_N$=0.37. Above $F_N$=0.3 Model 16B experiences about 8 % lower total resistance $R_t$ than the prior art Model 16A. (For a full-scale vessel 1, the reduction in total resistance $R_t$ will be even greater).

*Model test 2 - single propelled displacement hull*

Figure 20 shows upside down perspective illustrations of three displacement model vessels 1, where Model 20A shows a prior art model vessel 1, Model 20B shows a prior art model vessel 1 with a bow body 10 and Model 20C shows an inventive model vessel 1 with both a bow body 10 and an aft body 4.

The bow body 10 on Model 20B is in accordance with the patent publication EP3247620B1. Further, the configuration of the bow body 10 and bow area 21 is similar to the bow configuration shown in Figure 11.

Model 20C has the same bow body 10 and bow area 21 as Model 20B, but with an aft hull section 3 similar to the aft hull section 3 shown in Figure 11.

All three model vessels 1 have a hull length of 184 cm. The width for Model 20A is 36 cm and 34 cm for both Model 20B and Model 20C. Further, all three model vessels 1 have the same weight and thereby the same displacement volume, resulting in a draft $DV$ of 14 cm for Model 20A, 15 cm for Model 20B and 15.2 cm for Model 20C.

The separation line 6 for Model 20A and Model 20B is located respectively 2,0 cm and 1,5 cm under the water surface 5 and for Model 20C at the water surface 5 when the model vessels 1 are floating motionless in a body of water.

Moreover, the length of the chord line 43 of the aft body 4 of Model 20C is 11 cm, and the maximum width (W) of the aft body 4 in the transvers direction (w) of the hull 2 is 33 cm. The chord angel $\gamma$ is oriented parallel to the water surface 5 and the underside 46 of the aft body 4 is located 7 cm under the water surface 5 when the model vessel 1 is floating motionless in a body of water. The separation line 6 is located 5 cm upstream / in front of the transom 7 and the leading edge 41 of the aft body 4 is located vertically below the separation line 6. The maximum vertical thickness of the aft body 4 is 1.1 cm. The angel $\beta$ between the tangent line $TH$ and the water surface 5 is 8.5 degrees.

During model tests, all three model vessels 1 have a neutral trim when floating motionless in a body of water.

In order to compare the inventive Model 20C having an aft body 4 with a prior art Model 20B (without an aft body 4), and to exclude the tendency of the inventive Model 20C to generate a bow down trim of the vessel 1 due to the aft body 4, thereby preventing a stern down trim, the angel of attach of the bow body 10 for Model 20B and Model 20C are adjusted separately to obtain close to neutral trim and unchanged draft for their bow area 21 when they are in motion throughout the testing speed range. The wave making from the bow area 21 is then similar for the Model 20B and Model 20C. The bow body 10 contributes to a great reduction of wave resistance $R_w$ from the bow area 21. The main differences in total resistance $R_t$ between the Model 20B and the inventive Model 20C is thus isolated to be the difference between an aft hull section 3 without and with an aft body 4.

Figure 21 shows the results from the model testing, logged as total resistance $R_t$ [$N$] as a function of speed ($F_N$). As clearly shown in the graphs, the total resistance $R_t$ of the prior art Model 20A is significantly higher at a speed above $F_N = 0.3$. In the speed range from $F_N = 0.3$ to $F_N = 0.4$ the total resistance $R_t$ of Model 20B and Model 20C are almost the same and the aft body 4 does not have a significant effect for this embodiment in this speed range. Above $F_N = 0.4$, wave resistance $R_w$ from the aft hull section 3 becomes more crucial. Model 20C is seen to have a significantly lower total resistance $R_t$ compared to the prior art Model 20B at a speed above $F_N = 0.4$. The reason for the lower total resistance $R_t$ is the decrease in wave resistance $R_w$ from the aft hull section 3 of the inventive Model 20C. Hence, it is possible to design an inventive model vessel 1 (Model 20C) having the same total resistance $R_t$ as a prior art displacement model vessel 1 (Model 20A) at $F_N = 0.3$ but with 46 % lower total resistance $R_t$ at $F_N = 0.45$. (For a full-scale vessel 1 the reduction in total resistance $R_t$ will be even greater).

*Model test 3 - planing hull*

Figure 22 shows upside down perspective illustrations of two model vessels 1, where Model 22A is a "flat bottomed" prior art planing hull and Model 22B is an inventive model vessel 1 with a bow body 10 and an aft body 4. The bow area 21 of Model 22B is modified with a bow body 10 according to patent publication EP3247620B1 and the aft hull section 3 is modified with an aft body 4 as described herein.

Both model vessels 1 have a length of 120 cm and a width of 40 cm. Further, the weight, and accordingly the displacement volume, is the same for the two model vessels 1, giving a corresponding draft $DV$ of 5.5 cm for Model 22A and 6 cm for Model 22B when the model vessels 1 are floating motionless in a body of water.

The separation line 6 of Model 22A is located 5.5 cm under the water surface 5 and for Model 22B the separation line 6 is located at the water surface 5 when the model vessels 1 are floating motionless in a body of water.

The angel $\beta$ between the tangent line $TH$ and the water surface 5 is 20 degrees for Model 22B. The aft hull section 3 of Model 22B has a similar layout as shown in Figure 7C. The length of the cord line 43 is 14 cm and the chord angle $\gamma$ is parallel to the water surface 5. The underside 46 of the aft body 4 is located at the base line 58. The trailing edge 42 is arranged 3 cm downstream / aft of the separation line 6. The maximum vertical thickness of the aft body 4 is 1.8 cm.

During testing, both prior art Model 22A and inventive Model 22B are trimmed to neutral when floating motionless in a body of water.

Figure 23A, Figure 23B and Figure 23C show pictures of prior art Model 22A and inventive Model 22B at speed corresponding to $F_N = 0.4$, $F_N = 0.5$ and $F_N = 0.65$ respectively. At low speed, $F_N = 0.4$, the trim and wave making appears to be almost the same for both model vessels 1. At higher speed, $F_N = 0.5$, the prior art Model 22A gains an increasing positive trim with a significant increase in wave making. At a speed of $F_N = 0.65$, the bow area 21 of prior art Model 22A is lifted out of the water and the aft hull section 3 of the hull 2 causes a significant stern wave compared to the inventive Model 22B. The pictures hence demonstrate that the inventive model vessel 1 with a bow body 10 and an aft body 4 counteracts increasing sinkage of the aft hull section 3 as speed increases, while the trim and wave making stays almost the same regardless of speed.

Figure 24 shows the results from the model testing logged as required power [$W$] for the brushless electrical propulsion engine versus speed ($F_N$) for Model 22A and Model 22B. The required power [$W$] for the inventive Model 22B is lower than for the prior art Model 22A throughout the entire speed range tested. Particularly in the speed range from $F_N$ = 0.4 to $F_N$ = 0.7. At $F_N$ = 0.6 the inventive Model 22B requires 40 % less power [$W$] than the prior art Modell 22A. (For a full-scale vessel 1 the reduction in power [$W$] will be even greater).

### *Model tests - horizontal forces provided by an aft body*

To document how the configuration of an aft hull section 3 and an aft body 4 effects the horizontal forces provided by an aft body 4 in a longitudinal direction of a model vessel 1, a series of model tests have been conducted. The model tests are performed on a model vessel 1 with configurations according to the invention and configuration according to prior art, where the aft body 4 is providing a continuous propulsion force on the model vessel 1 (i.e. a continuous forwardly directed horizontal forces in the longitudinal direction of the model vessel 1).

*Model vessel - testing set up*

Figure 25 shows an upside-down perspective illustration of the model vessel 1 having a test setup to measure the horizontal forces in the longitudinal direction of the model vessel 1 from the aft body 4 acting on the model vessel 1. The same model vessel 1 is used for all the model tests. The model vessel 1 is configured with a hard chine bow area 21 to prevent a bow down trim of the model vessel 1 during testing (i.e. increased sinkage for the bow area 21).

Dimensions of the model vessel 1:

> Length: 185 cm
> Width: 34 cm
> Draft *DV:* 8-10 cm
> Maximum width (W) of all aft bodies 4: 34 cm

Maximum vertical thickness of all aft bodies 4: 1.1 cm, except for aft body 4 marked (B) in Figure 31 which is 1.4 cm thick.

Figure 26 shows a side view of the aft hull section 3 of the model vessel 1 in Figure 25 where the aft body 4 and the two supports 8 are attached to the vessel 1 via two ball bearing slides 20 oriented in a horizontal longitudinal direction of the model vessel 1 when the model vessel 1 is floating motionless in a mass of water. The ball bearing slides 20 are separated by 18 cm in the transvers direction of the hull 2. The setup enables the aft body 4 to move freely in the horizontal longitudinal direction of the model vessel 1. A high precision load cell 17 is mounted to the vessel 1 and is further attached to the support 8 arrangement in order to measure the horizontal forces generated by the aft body 4 in the longitudinal direction of the model vessel 1. A compression force measured in the load cell 17 gives a positive value reading corresponding to the aft body 4 providing a resistance force on the model vessel 1 (i.e. a backwardly directed horizontal forces in the longitudinal direction of the model vessel 1). While a tension/stretch force measured in the load cell 17 gives a negative value reading corresponding to the aft body 4 providing a propulsion force on the model vessel 1 (i.e. a forwardly directed horizontal forces in the longitudinal direction of the model vessel 1).

The model vessel 1 shown in Figure 25 and Figure 26 is fitted with an interchangeable aft hull section 3 below the water surface 5 in order to compare different geometries of the aft hull section 3 and accordingly different angels $\beta$ between *TH* and the water surface 5. It is further possible to alter the chord angel y, the draft *DV* of the hull 2, the depth of the aft body 4 in relation to the base line 58 and changing to an aft body 4 with a longer chord line 43. The different configurations tested are shown in Figures 27-32.

During all model tests the leading edge 41 of the aft body 4 was located 10 mm downstream / aft of the separation line 6, the chord angel $\gamma$ is 0 degree unless otherwise stated and the trim angel of the model vessel 1 was kept neutral when floating motionless in a body of water.

*Results from model tests*

Figure 33 is showing the test results for a model vessel 1 having a configuration as shown in Figure 27 with a chord angle $\gamma$ of 0 degrees marked (A), a chord angle $\gamma$ of -2 degrees marked (B) and a chord angle $\gamma$ of -3 degrees marked (C). As seen from Figure 33 the aft body 4 having a chord angel $\gamma$ of 0 degrees (graph (A)) is providing a backwardly directed force (i.e. resistance) throughout the entire speed range. Also, a chord angel $\gamma$ of -2 degrees (graph (B)) is providing a backwardly directed force throughout the entire speed range. As seen for graph (B) the resistance is decreasing from about $F_N$ = 0.23 to $F_N$ = 0.44 and increasing thereafter. At a chord angel $\gamma$ of -3 degrees (graph (C)) there is a forwardly directed force (i.e. propulsion) in the speed range from about $F_N$ = 0.36 to $F_N$ = 0.51. Outside this speed range there is a backwardly directed force also for a chord angel of -3 degrees. It should be noted that none of the graphs (A), (B) or (C) in Figure 33 provides a continuous forwardly directed propulsion.

Figure 34 shows the effect of altering the ratio of the leading-edge area divided by the trailing edge area (i.e. $A_{le}/A_{te}$ ratio). This is achieved by varying the draft *DV* of the model vessel 1 from 80 mm to 90 mm and to 100 mm as shown in Figure 28. Since the width in the transverse direction of the hull 2 of the leading edge 41 is the same as the width of the trailing edge 42, the $A_{le}/A_{te}$ ratio equals the *H1/H2* ratio. As seen from graph (A) showing $A_{le}$ = 1.0x$A_{te}$, the aft body 4 is providing a backwardly directed force (i.e. resistance) throughout the entire speed range. Also for $A_{le}$ = 0.83x$A_{te}$ (graph (B)) the aft body 4 is providing a backwardly directed force throughout the entire speed range. At $A_{le} = 0.71 \times A_{te}$ there is a very small forwardly directed force (i.e. propulsion) present in the speed range from about $F_N = 0.22$ to $F_N = 0.34$. Outside this speed range there is a backwardly directed force also for $A_{le} = 0.71 \times A_{te}$. As can be seen from Figure 34, a reduction of the $A_{le}/A_{te}$ ratios (from graph (A) to graph (C)) leads to a reduction in resistance from the aft body 4 throughout the entire speed range and especially at the lower end of the speed range. Such a low ratio is hence important for achieving a propulsion from the aft body 4. It should however be noted, that none of the graphs (A) or (B) in Figure 34 provides a continuous forwardly directed propulsion.

Figure 35 shows the effect of altering the configuration of the aft hull section 3 by changing the angle $\beta$ of the tangent line TH immediately upstream / in front of the separation line 6 as shown in Figure 29. As seen from graph (A), showing a TH angel $\beta$ of 4.5 degrees, the aft body 4 is providing a backwardly directed force (i.e. resistance) throughout the entire speed range. From graph (B), showing a TH angel $\beta$ of 11.0 degrees, there is a very small forwardly directed force (i.e. propulsion) present in the speed range from about $F_N = 0.34$ to $F_N = 0.45$. Outside this speed range there is a backwardly directed force also for a TH angel $\beta$ of 11.0 degrees. It is hence concluded that an increasing angle $\beta$ of the aft hull tangent TH reduces the resistance from the aft body 4 and may contribute to forward propulsion, while a lower angle $\beta$ will increase the resistance from the aft body 4. It should be noted that none of the graphs (A), (B) or (C) in Figure 35 provides a continuous forwardly directed propulsion.

Figure 36 shows the effect of altering the depth of the aft body 4 in relation to the base line 58 as shown in Figure 30, where graph (A) is showing the resistance for a deep aft body 4 located 30 mm above base line 58 and where graph (B) is showing the resistance for a shallow aft body 4 located 50 mm above the base line 58. As seen in Figure 36, both the deep (graph (A)) and the shallow (graph (B)) aft body 4 is providing a backwardly directed force (i.e. resistance) throughout the entire speed range, but the shallow aft body 4 (graph (B)) has a lower resistance than the deep aft body 4 (graph (A)) at a speed above $F_N = 0.18$.

Figure 37 shows the effect of altering the length of the chord line 43 of the aft body 4 as shown in Figure 31, where graph (A) is showing the resistance for a chord length of 105 mm (having a maximum vertical thickness of 1.1 cm) and graph (B) is showing the resistance for a chord length of 145 mm (having a maximum vertical thickness of 1.4 cm). As seen in Figure 37, both the smaller (graph (A)) and the larger (graph (B)) aft body 4 is providing a backwardly directed force (i.e. resistance) throughout the entire speed range, but the smaller aft body 4 (graph (A)) has a lower resistance than the larger aft body 4 (graph (B)) throughout the speed range.

Figure 38 is showing the test results for a model vessel 1 with aft hull sections 3 as shown in Figure 32 for a configuration according to an inventive model vessel 1 marked (A) and for a configuration according to a prior art model vessel 1 marked (B).

The geometry of the inventive model vessel 1 (A) is configured to minimize the wave resistance $R_w$ from the aft hull section 3. Hence, the inventive model vessel 1 (A) has a draft DV(A) of 80 mm, which entails $A_{le} = 1.0 \times A_{te}$, an angle $\beta$(A) for the tangent line TH of 4.5 degrees and a chord angel y(A) of 0 degree.

In order to obtain a continuous forward propulsion from the aft body 4 the configuration of the prior art model vessel 1 (B) is based upon a combination of the configurations found through the model testing to contribute to a forward propulsion. The prior art model vessel 1 (B) hence has a draft DV(B) of 100 mm, which entails $A_{le} = 0.71 \times A_{te}$, an angle $\beta$(B) for the tangent line TH of 11.0 degrees and a chord angel $\gamma$(B) of -2 degrees.

From Figure 38 graph (A) it can be seen that the aft body 4 of the inventive model vessel 1 (A) is providing a continuous backwardly directed force (i.e. resistance) throughout the speed range. The resistance graph (A) is kept relatively steady from $F_N = 0.2$ to $F_N = 0.4$. Above $F_N = 0.4$ the resistance from the aft body 4 of the inventive model vessel 1 (A) is increasing with increasing speed. This is in clear contrast to graph (B), showing a continuous forwardly directed force (i.e. propulsion) throughout the speed range of the prior art model vessel 1 (B) and increasing as the speed increases.

*Conclusion from model testing*

When measuring the horizontal forces from the aft body 4 of a model vessel 1 according to the invention, it was revealed that the aft body 4 itself applied a backwardly directed force (i.e. resistance) on the model vessel 1. When the configuration of the aft body 4 and the geometry of the aft hull section 3 was altered, creating a vessel 1 beyond the scope of the invention, a forwardly directed force (i.e. propulsion) from the aft body 4 occurred under certain conditions.

A low $A_{le}/A_{te}$ ratio, a high angel $\beta$ of the tangent line TH and a downward tilted chord angel $\gamma$ are important parameters to achieve a propulsion force from the aft body 4. Furthermore, a reduction of the chord length of the aft body 4 and an arrangement of the aft body 4 closer to the water surface 5 will also contribute to possibly achieve forward propulsion from the aft body 4.

The model tests demonstrate that a configuration seeking to achieve forward propulsion from the aft body 4 are contrary to a configuration seeking to achieve a reduction of the stern wave 9.

Hence a prior art vessel 1 will benefit from a low $A_{le}/A_{te}$ ratio to achieve forward propulsion from the aft body 4. This is in clear contrast to the inventive vessel 1 which will benefit of a ratio of $A_{le}/A_{te} \approx 1.0$ to achieve equilibrium in the water mass downstream the aft body 4.

A prior art vessel 1 will benefit from a larger angel $\beta$ of the tangent line TH to achieve forward propulsion from the aft body 4. This is also in clear contrast to the inventive vessel 1 which will benefit of small angel $\beta$ of the tangent line *TH* to achieve a horizontal direction of a water flow 51 downstream the aft body 4.

A prior art vessel 1 will benefit from a negative chord angel $\gamma$ to achieve forward propulsion from the aft body 4. Again, this is in clear contrast to the inventive vessel 1 which will benefit of horizontal, or near horizontal, chord angel $\gamma$ to achieve a horizontal direction of a water flow 51 downstream the aft body 4.

A prior art vessel 1 having a larger angel $\beta$ of the tangent line *TH* would also benefit from an even more negative chord angel $\gamma$. However, both a higher angel $\beta$ of the tangent line *TH* and an increased negative chord angel $\gamma$ will contribute to an increasing stern wave 9.

A prior art vessel 1 will benefit from a shorter chord length of the aft body 4 as a shorter chord length results in larger forward propulsion. In contrast, an inventive vessel 1 would need a longer chord length of the aft body 4 to be able redirect the upwardly directed water flow 51 upstream / in front of the aft body 4 to a horizontal water flow 51 downstream the aft body 4 without causing turbulence.

A visual comparison of models tested of the inventive vessel 1 described above and the prior art vessels 1 providing forward propulsion from an aft body 4 shows that the inventive vessel 1 generates a smaller stern wave 9 and has less sinkage at the stern relative to the prior art vessel 1. It is further observed through model tests, not included in this paper, that an inventive vessel 1 seeking to obtain a reduced stern wave 9 contributes to a larger reduction in total resistance $R_r$ for the vessel 1 than a design according to the prior art seeking to obtain forward propulsion from the aft body 4.

In the preceding description, various aspects of the vessel 1 according to the invention have been described with reference to the illustrative embodiment. For purposes of explanation, specific numbers, systems and configurations were set forth in order to provide a thorough understanding of the vessel 1 and its workings. However, this description is not intended to be construed in a limiting sense. Various modifications and variations of the illustrative embodiments, as well as other embodiments of the vessel 1, which are apparent to persons skilled in the art to which the disclosed subject matter pertains, are deemed to lie within the scope of the present invention.

CLAUSES

    1. A vessel (1) for floating in a body of water comprising:

- a longitudinal hull (2) with an aft hull section (3) comprising a separation line (6) defined as a line extending in a transverse direction (w) of the hull (2) at which a water flow (51) originally flowing along the hull (2) is separated from the aft hull section (3) above a minimum forward propulsion of the vessel (1) and wherein the separation line (6) further is defined by the aft hull section (3) having an abrupt change of direction in a longitudinal vertical plane of the hull (2),

- an aft body (4) arranged at a distance from the aft hull section (3) at a location between the water surface (5) and 110 % of a draft (*DV*) of the hull (2) when the vessel (1) is floating motionless in a body of water at a lightweight waterline (*LWWL*), forming a passage between the aft body (4) and the separation line (6), wherein the aft body (4) comprises:

    ○ a maximum width (*W*) measured in a horizontal plane in the transverse direction (w) of the hull (2),
    ○ a leading edge (41),
    ○ a trailing edge (42) and
    ○ a chord line (43) defined by a straight line in a longitudinal vertical plane of the hull (2) extending from the leading edge (41) to the trailing edge (42),

- a leading edge distance (*H1*) defined by the smaller of:

    ○ a minimum distance measured in a longitudinal vertical plane of the hull (2) between the leading edge (41) and the aft hull section (3) and
    ○ a minimum distance measured in said longitudinal vertical plane of the hull (2) between two parallel lines *(TH, TF)*, wherein the first line *(TH)* is a tangent line of the aft hull section (3) immediately in front of the separation line (6) and the second line *(TF)* is intersecting the leading edge (41),

- a trailing edge distance (*H2*) defined by the minimum distance in said longitudinal vertical plane of the hull (2) between the trailing edge (42) and a water surface (5), and
- an angel ($\beta$) defined as the angel between the first line (*TH*) and the water surface (5) measured in said longitudinal vertical plane of the hull (2),

**characterised in** that, when the vessel (1) is floating motionless in a body of water at the lightweight waterline (*LWWL*):

- the aft body (4) and the aft hull section (3) is configured so that the leading edge distance (*H1*) is at least 0.8 times the trailing edge distance *(H2)* and that

- the angle ($\beta$) is less than 20 degrees.

2. The vessel (1) according to clause 1, **characterised in** that the separation line (6) is located at or above the water surface (5) when the vessel (1) is laying still and floating in a body of water at the lightweight waterline *(LWWL)*.

3. The vessel (1) according to any of the preceding clauses, **characterised in** that the leading edge (41) is situated less then half the length of the chord line (43) aft of the separation line (6).

4. The vessel (1) according to any of the preceding clauses, **characterised in** that the leading edge (41) is situated less than 20 % of the length of the chord line (43) aft of the separation line (6).

5. The vessel (1) according to any of the preceding clauses, **characterised in** that at least a part of the aft body (4) is located in front of the separation line (6).

6. The vessel (1) according to any of the preceding clauses, **characterised in** that the leading edge (41) is situated at least half the length of the chord line (43) in front of the separation line (6).

7. The vessel (1) according to clause 6, **characterised in** that the top surface (45) of the aft body (4) and the aft hull section (3) is designed such that the minimum distance in a longitudinal vertical plane between said top surface (45) and the aft hull section (3) in front of the separation line (6) remains constant or near constant.

8. The vessel (1) according to any of the preceding clauses, **characterised in** that the chord line (43) is orientated parallel with the water surface (5) when the vessel (1) is floating motionless in a body of water at the lightweight waterline (*LWWL*).

9. The vessel (1) according to any of the preceding clauses, **characterised in** that the chord line (43) is orientated parallel with the water surface (5) or with a positive angle relative to the water surface (5) when the vessel (1) is floating motionless in a body of water at the lightweight waterline (*LWWL*).

10. The vessel (1) according to any of the preceding clauses, **characterised in** that the aft body (4) and the aft hull section (3) is configured such that, during forward propulsion of the vessel (1), the net force component exerted onto the vessel (1) from the aft body (4) in the direction of travel of the vessel (1) is zero or negative in more than 50 % of the speed range the vessel (1) is operating in.

11. The vessel (1) according to any of the preceding clauses, **characterised in** that the aft body (4) is designed to give a positive lifting force during forward propulsion of the vessel (1).

12. The vessel (1) according to any of the preceding clauses, **characterised in** that the aft body (4) is designed such that, during forward propulsion of the vessel (1), the direction of a resulting water flow (51) immediately downstream of the trailing edge (42) due to a water flow (51) passing a top surface (45) of the aft body (4) and a water flow (51) passing an underside (46) of the aft body (4), is orientated parallel or near parallel to the water surface (5).

13. The vessel (1) according to any of the preceding clauses, **characterised in** that at least a part of the trailing edge (42) is located deeper than 35 % of the draft *(DV)* when the vessel (1) is floating motionless in a body of water at the lightweight waterline *(LWWL)*.

14. The vessel (1) according to any of the preceding clauses, **characterised in** that the length of the chord line (43) is at least equal to the draft *(DV)* of the hull (2) when the vessel (1) is floating motionless in a body of water at the lightweight waterline *(LWWL)*.

15. The vessel (1) according to any of the preceding clauses, **characterised in** that the aft body (4) constitutes an integrated part of the vessel (1).

16. The vessel (1) according to any of the preceding clauses, **characterised in** that the aft hull section (3) located downstream the separation line (6) is situated over the water surface (5) during forward propulsion of the vessel (1).

17. The vessel (1) according to any of the preceding clauses, **characterised in** that the hull (2) comprises a transom (7) located at or above the water surface (5) when the vessel (1) is laying still and floating in a body of water at the lightweight waterline *(LWWL)*.

18. The vessel (1) according to any of the preceding clauses,

**characterised in** that the aft body (4) is designed and positioned such that a part of a water flow (51) flowing over a top surface (45) of the aft body (4) is lifted above the water surface (5) during forward propulsion of the vessel (1).

19. The vessel (1) according to any of the preceding clauses,
**characterised in** that the vessel (1) further comprises a bow body (10) located in front of a bow area (21), wherein the bow body (10) is configured to lead the water mass passing a top surface of the bow body (10) away from the bow area (21), or essentially parallel to the bow area (21), or a combination thereof.

20. The vessel (1) according to any of the preceding clauses,
**characterised in** that the hull (2) is a displacement hull.

21. The vessel (1) according to any of the preceding clauses,
**characterised in** that the aft body (4) and the aft hull section (3) is configured so that the draft of the hull (2) during forward propulsion of the vessel (1) will be at least 80 % of the draft *(DV)* of the hull (2) when the vessel (1) is floating motionless in the body of water.

22. The vessel (1) according to any of the preceding clauses,
**characterised in** that the leading edge (41) is parallel with the water surface (5) when the vessel (1) is floating motionless in the body of water at the lightweight waterline (*LWWL*).

23. The vessel (1) according to any of the preceding clauses,
**characterised in** that the vessel (1) is a multi-hull vessel (1).

24. The vessel (1) according to any of the preceding clauses,
**characterised in** that the maximum width (*W*) of the aft body (4) measured in a horizontal plane in the transverse direction (*w*) of the hull (2) is at least 50 % of the maximum width of the hull (2) measured at the water surface (5) in the transverse direction (*w*) of the hull (2) when the vessel (1) is floating motionless in the body of water at the lightweight waterline *(LWWL)*.

25. The vessel (1) according to any of the preceding clauses,
**characterised in** that the trailing edge (42) is located a horizontal length of at least one chord line (43) aft of the separation line (6).

26. The vessel (1) according to any of the preceding clauses,
**characterised in** that the length of the chord line (43) is at least 5 % of the length between perpendiculars of the vessel (1).

27. The vessel (1) according to any of the preceding clauses,
**characterised in** that the vessel (1) has a planing hull (2).

**Claims**

1. A vessel (1) for floating in a body of water comprising:

 - a longitudinal hull (2) with an aft hull section (3) comprising a separation line (6) defined as a line extending in a transverse direction (*w*) of the hull (2) at which a water flow (51) originally flowing along the hull (2) is separated from the aft hull section (3) above a minimum forward propulsion of the vessel (1) and wherein the separation line (6) further is defined by the aft hull section (3) having an abrupt change of direction in a longitudinal vertical plane of the hull (2),
 - an aft body (4) arranged at a distance from the aft hull section (3) at a location between the water surface (5) and 110 % of a draft (*DV*) of the hull (2) when the vessel (1) is floating motionless in a body of water at a lightweight waterline (*LWWL),* forming a passage between the aft body (4) and the separation line (6), wherein the aft body (4) comprises:

  ○ a maximum width (*W*) measured in a horizontal plane in the transverse direction (w) of the hull (2),
  ○ a leading edge (41),
  ○ a trailing edge (42) and
  ○ a chord line (43) defined by a straight line in a longitudinal vertical plane of the hull (2) extending from the leading edge (41) to the trailing edge (42),

 - a leading edge distance (*H1*) defined by the smaller of:

  ○ a minimum distance measured in a longitudinal vertical plane of the hull (2) between the leading edge (41) and the aft hull section (3) and
  ○ a minimum distance measured in said longitudinal vertical plane of the hull (2) between two parallel lines (*TH, TF),* wherein the first line *(TH)* is a tangent line of the aft hull section (3) immediately in front of the separation line (6) and the second line (*TF*)

is intersecting the leading edge (41),

- a trailing edge distance (H2) defined by the minimum distance in said longitudinal vertical plane of the hull (2) between the trailing edge (42) and a water surface (5), and
- an angel (β) defined as the angel between the first line (TH) and the water surface (5) measured in said longitudinal vertical plane of the hull (2),

**characterised in that**, when the vessel (1) is floating motionless in a body of water at the lightweight waterline (LWWL):

- the aft body (4) and the aft hull section (3) is configured so that the leading edge distance (H1) is at least 0.8 times the trailing edge distance (H2) and that
- the angle (β) is less than 20 degrees.

2. The vessel (1) according to claim 1, **characterised in that** the separation line (6) is located at or above the water surface (5) when the vessel (1) is laying still and floating in a body of water at the lightweight waterline (LWWL).

3. The vessel (1) according to any of the preceding claims, **characterised in that** the leading edge (41) is situated less then half the length of the chord line (43) aft of the separation line (6).

4. The vessel (1) according to any of the preceding claims, **characterised in that** at least a part of the aft body (4) is located in front of the separation line (6).

5. The vessel (1) according to any of the preceding claims, **characterised in that** the leading edge (41) is situated at least half the length of the chord line (43) in front of the separation line (6).

6. The vessel (1) according to claim 5, **characterised in that** the top surface (45) of the aft body (4) and the aft hull section (3) is designed such that the minimum distance in a longitudinal vertical plane between said top surface (45) and the aft hull section (3) in front of the separation line (6) remains constant or near constant.

7. The vessel (1) according to any of the preceding claims, **characterised in that** the chord line (43) is orientated parallel with the water surface (5) or with a positive angle relative to the water surface (5) when the vessel (1) is floating motionless in a body of water at the lightweight waterline (LWWL).

8. The vessel (1) according to any of the preceding claims, **characterised in that** the aft body (4) and the aft hull section (3) is configured such that, during forward propulsion of the vessel (1), the net force component exerted onto the vessel (1) from the aft body (4) in the direction of travel of the vessel (1) is zero or negative in more than 50 % of the speed range the vessel (1) is operating in.

9. The vessel (1) according to any of the preceding claims, **characterised in that** the aft body (4) is designed such that, during forward propulsion of the vessel (1), the direction of a resulting water flow (51) immediately downstream of the trailing edge (42) due to a water flow (51) passing a top surface (45) of the aft body (4) and a water flow (51) passing an underside (46) of the aft body (4), is orientated parallel or near parallel to the water surface (5).

10. The vessel (1) according to any of the preceding claims, **characterised in that** the aft body (4) is designed and positioned such that a part of a water flow (51) flowing over a top surface (45) of the aft body (4) is lifted above the water surface (5) during forward propulsion of the vessel (1).

11. The vessel (1) according to any of the preceding claims, **characterised in that** the vessel (1) further comprises a bow body (10) located in front of a bow area (21), wherein the bow body (10) is configured to lead the water mass passing a top surface of the bow body (10) away from the bow area (21), or essentially parallel to the bow area (21), or a combination thereof.

12. The vessel (1) according to any of the preceding claims, **characterised in that** the hull (2) is a displacement hull.

13. The vessel (1) according to any of the preceding claims, **characterised in that** the aft body (4) and the aft hull section (3) is configured so that the draft of the hull (2) during forward propulsion of the vessel (1) will be at least 80 % of the draft (DV) of the hull (2) when the vessel (1) is floating motionless in the body of water.

14. The vessel (1) according to any of the preceding claims, **characterised in that** the leading edge (41) is parallel with the water surface (5) when the vessel (1) is floating motionless in the body of water at the lightweight waterline (*LWWL*).

15. The vessel (1) according to any of the preceding claims, **characterised in that** the maximum width (*W*) of the aft body (4) measured in a horizontal plane in the transverse direction (w) of the hull (2) is at least 50 % of the maximum width of the hull (2) measured at the water surface (5) in the transverse direction (*w*) of the hull (2) when the vessel (1) is floating motionless in the body of water at the lightweight waterline (*LWWL*).

16. The vessel (1) according to any of the preceding claims, **characterised in that** the vessel (1) has a planing hull (2).

Figure 1

Figure 2 (PRIOR ART)

Figure 3 (PRIOR ART)

Figure 4

Figure 5

Figure 6

Figure 7

Figure 8

Figure 9

Figure 10

Figure 11

Figure 12

L - A            M - A            R - A

L - B            M - B            R - B

L - C            M - C            R - C

$F_N < 0.4$       $F_N = 0.4 - 0.9$       $F_N > 0.9$

Rt (**A**)

Rt (**B**)

Rt (**C**)

Resistance [N]

0,1   0,2   0,3   0,4   0,5   0,6   0,7   0,8   0,9   1,0   1,1   ($F_N$)

Figure 13

(a)

(b)

Figure 14 A

(c)

(d)

Figure 14 B

(a)

(b)

Figure 15 A

(c)

(d)

Figure 15 B

Model 16A

Model 16B

Figure 16

Figure 17

Speed, $F_N = 0.30$

Model 16A

Model 16B

Figure 18A

Speed, $F_N$ = 0.36

Model 16A

Model 16B

Figure 18B

Figure 19

Model 20A

Model 20B

Model 20C

Figure 20

Figure 21

Model 22A

Model 22B

Figure 22

Speed, $F_N = 0.4$

Model 22A

Model 22B

Figure 23A

Speed, $F_N = 0.5$

Model 22A

Model 22B

Figure 23B

Speed, $F_N = 0.65$

Model 22A

Model 22B

Figure 23C

Figure 24

Figure 25

Figure 26

Figure 27

Figure 28

Figure 29

Figure 30

Figure 31

Figure 32

Figure 33

Figure 34

Figure 35

Figure 36

Figure 37

Figure 38

Europäisches
Patentamt
European
Patent Office
Office européen
des brevets

# EUROPEAN SEARCH REPORT

**Application Number**

EP 25 21 5584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/148966 A2 (OOSSANEN & ASSOCIATES B V VAN [NL]; VAN OOSSANEN PIETER [NL]) 27 December 2007 (2007-12-27) | 1-10, 12-16 | INV. B63B1/18 B63B1/40 |
| Y | * page 11, line 14 - page 12, line 23; figures 4a, 4b * | 11 | B63B1/08 B63B1/24 |
| X | ? K Uithof ET AL: "AN UPDATE ON THE DEVELOPMENT OF THE HULL VANE", , 10 March 2015 (2015-03-10), XP055175386, Retrieved from the Internet: URL:https://web.archive.org/web/2015031016 3600/http://www.hullvane.com/beheer2/wp-co ntent/uploads/2015/01/AN-UPDATE-ON-THE-DEV ELOPMENT-OF-THE-HULL-VANE-vFixed.pdf [retrieved on 2015-03-10] * paragraph [03.3]; figure 3 * | 1-7, 13-16 | ADD. B63B1/20 |
| X,D | WO 2016/010423 A1 (OOSSANEN & ASSOCIATES B V VAN [NL]) 21 January 2016 (2016-01-21) * paragraph [0048] * * paragraph [0053]; figures 1,4 * | 1 | |
| Y | EP 3 247 620 A1 (RASMUSSEN MARITIME DESIGN AS [NO]) 29 November 2017 (2017-11-29) * abstract; figures * | 11 | |

**TECHNICAL FIELDS SEARCHED (IPC)**

B63B

The present search report has been drawn up for all claims

| Place of search | Date of completion of the search | Examiner |
|---|---|---|
| The Hague | 5 March 2026 | Schmitter, Thierry |

EPO FORM 1503 03.82 (P4C01)

## ANNEX TO THE EUROPEAN SEARCH REPORT
## ON EUROPEAN PATENT APPLICATION NO.

EP 25 21 5584

This annex lists the patent family members relating to the patent documents cited in  the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | Publication date |
|---|---|---|---|
| WO 2007148966 A2 | 27-12-2007 | DK 2029420 T3 | 09-02-2015 |
| | | EP 2029420 A2 | 04-03-2009 |
| | | JP 2009541117 A | 26-11-2009 |
| | | KR 20090051010 A | 20-05-2009 |
| | | TW 200925051 A | 16-06-2009 |
| | | WO 2007148966 A2 | 27-12-2007 |
| WO 2016010423 A1 | 21-01-2016 | EP 3169580 A1 | 24-05-2017 |
| | | ES 2711853 T3 | 07-05-2019 |
| | | JP 6650448 B2 | 19-02-2020 |
| | | JP 2017522233 A | 10-08-2017 |
| | | SG 11201700247Q A | 27-02-2017 |
| | | TR 201902358 T4 | 21-03-2019 |
| | | US 2017197687 A1 | 13-07-2017 |
| | | WO 2016010423 A1 | 21-01-2016 |
| EP 3247620 A1 | 29-11-2017 | AU 2015371072 A1 | 03-08-2017 |
| | | BR 112017013488 A2 | 27-02-2018 |
| | | CA 2971771 A1 | 30-06-2016 |
| | | CL 2017001639 A1 | 02-02-2018 |
| | | CN 107406121 A | 28-11-2017 |
| | | DK 3247620 T3 | 15-07-2019 |
| | | EA 201791459 A1 | 29-12-2017 |
| | | EP 3037338 A1 | 29-06-2016 |
| | | EP 3247620 A1 | 29-11-2017 |
| | | ES 2733699 T3 | 02-12-2019 |
| | | JP 6697786 B2 | 27-05-2020 |
| | | JP 2018501150 A | 18-01-2018 |
| | | KR 20170096052 A | 23-08-2017 |
| | | MX 380156 B | 12-03-2025 |
| | | MY 186843 A | 25-08-2021 |
| | | NZ 732720 A | 28-04-2023 |
| | | PE 20171392 A1 | 20-09-2017 |
| | | PH 12017501036 A1 | 27-11-2017 |
| | | PL 3247620 T3 | 30-09-2019 |
| | | TR 201909861 T4 | 22-07-2019 |
| | | US 2017341712 A1 | 30-11-2017 |
| | | WO 2016102497 A1 | 30-06-2016 |

EPO FORM P0459

For more details about this annex : see Official Journal of the European Patent Office, No. 12/82

**REFERENCES CITED IN THE DESCRIPTION**

**Patent documents cited in the description**

- US 7617793 B2
- WO 2016010423 A1
- KR 200440081 Y1
- DE 2814260 A1
- US 4915048 A
- EP 3247620 B1
- US 7617793 A1